Europäisches Patentamt

European Patent Office

Office européen des brevets

(11) Publication number : **0 649 084 A1**

(12) **EUROPEAN PATENT APPLICATION**

(21) Application number : 94307582.0

(22) Date of filing : 17.10.94

(51) Int. Cl.⁶ : **G06F 9/38**

(30) Priority : 18.10.93 US 138783

(43) Date of publication of application :
19.04.95 Bulletin 95/16

(84) Designated Contracting States :
CH DE ES FR GB IE IT LI NL

(71) Applicant : CYRIX CORPORATION
2703 N. Central Expressway
Richardson, Texas 75080 (US)

(72) Inventor : Bluhm, Mark
4545 Staten Island
Plano, Texas 75082 (US)
Inventor : McMahan, Steven C.
3311 Wyndemere Drive
Richardson,Texas 75082 (US)

(74) Representative : Harris, Ian Richard et al
c/o D. Young & Co.,
21 New Fetter Lane
London EC4A 1DA (GB)

(54) Microprocessor branch processing.

(57) A branch processing unit (BPU) is used, in an exemplary embodiment, in a superscalar, superpipelined microprocessor compatible with the x86 instruction set architecture. The BPU (140) predicts the direction of branches, and provides target addresses for predicted taken branches and unconditional change of flow (UCOF) instructions (jumps, calls, returns). The BPU includes a target cache (110) for storing target addresses for UCOFs and predicted taken branches -- a history cache (120) stores history information for branches predicted not taken. A return address stack (130) stores target addresses for returns associated with calls stored in the target cache, while a far target cache (140) stores limits and mode bits for far targets stored in the target cache. Resolution logic (150) monitors branch execution, resolving branch predictions and repairing the execution pipeline in the case of mispredictions. The BPU is accessed at prefetch time with the prefetch address. For accesses that hit in the BPU, the target address is supplied to prefetcher (35), which begins prefetching at the predicted target address, shifting the code stream in one clock as it enters the prefetch buffer (30). A branch is allocated into the resolution logic when it issues (from the ID2 pipe stage) -- a branch will issue only if the number of outstanding (unresolved) branches (or floating point instructions) is three or less. For issued branches, the prefetcher prefetches in both the predicted and not-predicted direction -- NP prefetch registers (164) store prefetched instruction bytes in the not-predicted direction such that, in the case of a branch misprediction, the contents of the corresponding NP prefetch buffer are transferred to the prefetch buffer (162) to initiate repair. For calls, return target addresses are pushed onto the return address stack either (a) when a call hits in the target cache during prefetch, or (b) for a previously undetected call, when the call is decoded. For far targets, the far target cache stores limits and modes, and is accessed by indirection bits stored with a far target in the target cache

FIG. 5a

## CROSS REFERENCES TO RELATED APPLICATIONS

This application incorporates by reference the subject matter of co-pending U. S. Patent Applications Ser. No. 08/138,781, (Atty Docket CX-00181) titled "Speculative Execution In A Pipelined Processor", filed October 18, 1993, Ser. No. 08/138,789, (Atty Docket CX-00190) titled "Pipelined Processor With Independent Instruction Issuing", filed October 18, 1993, and Ser. No. 08/138,654, (Atty Docket CX-186) titled "Control of Data for Speculation Execution and Exception Handling in a Microprocessor with Write Buffer", filed October 18, 1993, all assigned to the assignee of this application.

## BACKGROUND

### 1. Technical Field.

The invention relates generally to pipelined digital processors, and more particularly to structures and methods for branch processing (including prediction and target addressing), implemented as a branch processing unit. In an exemplary embodiment, this branch prediction and target addressing functions are implemented as a branch processing unit in a superscalar, superpipelined microprocessor compatible with the x86 instruction set architecture.

### 2. Related Art.

Computers commonly employ pipeline techniques to reduce the average execution time per instruction. An execution pipeline is divided into pipe stages -- instructions are executed in stages allowing multiple instructions to be overlapped in the execution pipeline. The performance goal is for each pipe stage to complete all associated operations on an instruction in a clock cycle, such that instructions continuously advance to the next pipe stage and an instruction completes execution each clock cycle.

Pipeline performance is significantly affected by hazards that prevent a pipe stage from completing its operations in a single clock cycle, thereby causing pipe stalls or bubbles. Three general classes of pipeline hazards are: (a) structural hazards which arise from hardware resource conflicts; (b) data hazards which arise from dependency of an instruction on the results of, a previous instruction; and (c) control hazards which arise from instructions that change the flow of the instruction stream.

Change of flow (COF) hazards interrupt the code stream, significantly impacting pipeline performance -- COFs typically account for 15-30% of the instruction mix. For example, in the x86 instruction set architecture, COFs occur on the average every four to six instructions. COF instructions include branches (including loops), jumps, and call/returns -- branches are conditional in that the branch may be taken or not taken (depending, for example, on the status of condition codes), while jumps and call/returns are unconditional (always taken). Taken branches and unconditional COFs (UCOFs) interrupt the instruction stream to cause instruction fetch to proceed from the target address.

Without limiting the scope of the invention, this background information is provided in the context of a general problem to which the invention has application: in a pipelined CPU (central processing unit) that executes the x86 instruction set, providing improved branch processing to minimize the performance impact of COF hazards.

With respect to branches, schemes that predict branch direction may be static or dynamic. Static branch prediction typically uses a taken/not taken switch embedded in the opcode at compile time to predict the branch -- that is, a given branch is predicted as either always taken or always not taken. Dynamic branch prediction involves using the past behavior (history) of branches that are executed repeatedly to make the prediction -- numerous prediction algorithms are used, generally relying on the fact that most branches strongly favor either the taken or not taken direction.

Dynamic branch prediction schemes are of two general types: (a) branch prediction, and (b) branch target addressing. Branch prediction schemes commonly implement a prediction algorithm based on two prediction history bits (requiring a branch to be mispredicted twice before the prediction changes). Branch target addressing schemes use a target cache for storing the predicted address of the next instruction -- either the fall through address for a branch predicted not taken, or the target address of a branch predicted taken.

Branch target addressing logic is commonly referred to as a branch target buffer (BTB). Each entry in the BTB's target cache typically includes (a) the (undecoded) branch instruction which is used as a tag, (b) the associated predicted fall through or target address for that branch instruction, and (c) an indication of whether the predicted address is for a taken or not-taken prediction (which is used to reduce the time to recover from a mispredicted branch). The BTB is accessed with undecoded instructions -- if an instruction hits in the cache, the associated predicted address will be used to begin fetching the next instruction (i.e., prior to the decode of the branch instruction being complete).

The BTB also includes branch prediction and resolution logic for predicting whether a branch will be taken or not taken, and for resolving predicted branches and repairing mispredictions. The branch prediction logic implements a prediction algorithm based on history bits stored with the corresponding branch instruction entry in the target cache. The resolution logic receives inputs (such as condition codes), resolves whether the branch actually was or was not taken, and repairs mispredicted branches. Repair of mispredicted branches involves terminating execution of the instructions in the mispredicted direction, restoring the state of the machine, and restarting execution from the correct instruction -- a branch misprediction results in a branch penalty corresponding to the number of clocks lost by mispredicting the branch rather than predicting the branch correctly.

Branch target buffers typically store target addresses for all changes of flow -- branches and UCOFs. In the case of UCOFs, no prediction is required, but the stored target address can be used to immediately begin instruction fetch at the target address (i.e., without waiting for the COF to be decoded).

Implementing a branch target buffer for an X86-compatible CPU requires taking into account a number of features of the x86 instruction set architecture, including: (a) variable length instructions, (b) a segmented memory model, and (c) self-modifying code.

For the 32-bit and 64-bit X86 architectures (i.e., currently the 386, 486, and 586 generations), instructions can be from 1 to 15 bytes in length (the average instruction is about 2.5 bytes). As a result, instructions will be misaligned in memory. Instruction prefetch is used to provide a continuous flow of instructions for execution. Instruction bytes are prefetched from cache or memory and placed in a prefetch buffer. Instruction bytes are transferred to the decoder which first determines instruction length and then decodes the instruction -- that is, instruction boundaries are not defined until the decode pipe stage.

Thus, from the standpoint of BTB design, if target address entries in the target cache are indexed using (undecoded) branch instructions, BTB access cannot occur until the decode stage. One scheme for accessing the BTB earlier, used in the Intel Corporation 80486, is to use the address (instruction pointer) of the instruction preceding a branch instruction as a tag associated with the address (instruction pointer) of the target instruction. When the instruction pointer for the instruction preceding the branch is defined (in a first decode stage), the BTB is accessed -- if the access hits in the BTB, the target instruction address is used to prefetch the target instruction from an instruction cache.

This scheme for accessing the BTB is disadvantageous in a number of respects, but primarily because is requires a dedicated instruction cache. That is, to avoid pipeline bubbles between the branch instruction (n) and the instruction at the target address (n+1), the BTB must be accessed with the previous instruction (n-1) in one clock and the target address fetched in the next clock:

Clk0      Decode n-1  
          BTB Access  
Clk1      Decode n  
          Target Fetch  
Clk2      Decode n+1  

This sequence requires that the Target Fetch be accomplished in the clock following BTB Access, which in turn requires a dedicated instruction cache because instruction fetch from a unified code/data cache may be stalled by a pending data fetch. This requirement of separate code and data caches (referred to as a Harvard architecture) reduces cache design flexibility.

In the x86 segmented memory model, branches and other COF instructions may have either near targets, meaning the target address is in the current segment, or far targets, meaning the target address is in another segment. To execute a far branch, the segment of the far target address must be loaded from memory, and checked for access rights and validity.

## SUMMARY

The invention relates to a pipelined processor that includes branch processing for branches and other unconditional changes of flow. The processor includes an instruction fetch stage that prefetches instruction bytes and an instruction decode stage the decodes the instruction bytes to obtain instructions, including COF (change of flow) instructions that specify a target address.

In one aspect of the invention, the pipelined processor includes prefetch means and branch processing means. The prefetch means generates prefetch addresses to fetch instruction bytes from a memory, which are stored in a prefetch buffer. The instruction bytes are fetched sequentially unless the prefetch means is directed to change the instruction flow by switching to an out-of-sequence prefetch address. A processor core means includes decode means for receiving instruction bytes from the prefetch buffer and decoding instructions.

The branch processing means includes a target cache for storing a plurality of predicted target addresses each corresponding to a COF instruction for which the branch processing means predicts a target address -- each predicted target address is tagged with an access tag corresponding to a prefetch address associated with the corresponding COF. In response to prefetch addresses from the prefetch means, the branch processing means accesses the target cache with corresponding access tags -- in the case of a hit, the branch processing means provides the associated predicted target address to the prefetch means, which then generates a corresponding prefetch address to fetch the corresponding instruction bytes, thereby changing instruction flow to the predicted target address.

In another aspect of the invention, a method of branch processing involves: (a) generating prefetch addresses to fetch instruction bytes from a memory, which are stored in a prefetch buffer, the instruction bytes being fetched sequentially unless the prefetch means is directed to change the instruction flow by switching to an out-of-sequence prefetch address, (b) decoding instructions from instruction bytes obtained from the prefetch buffer, (c) storing a plurality of predicted target addresses each corresponding to a COF instruction, each predicted target address being tagged with an access tag corresponding to a prefetch address associated with the corresponding COF, (d) in response to prefetch addresses, accessing stored predicted target addresses with corresponding access tags, and (e) in the case of a hit, generating a corresponding prefetch address to fetch the corresponding instruction bytes, thereby changing instruction flow to the predicted target address.

In other aspects of the invention, the branch processing means in the pipelined processor includes prediction means, branch resolution means, and means for prefetching the not-predicted direction of a branch. The prediction means predicts branch direction based on the branch history -- a history cache stores history information for branches that are previously detected but predicted not-taken. The branch resolution means monitors execution of COFs for which the branch processing means provides a predicted target address, determining whether (i) the predicted target address is the same as the actual target address, and, (b) for branches, whether the predicted direction is the same as the actual direction. The means for prefetching the not-predicted path stores, for each of a predetermined number of branches, a predetermined number of instruction bytes in not-predicted direction of the branch -- in response to a determination by the branch resolution means that a branch is mispredicted, the prefetch means transfers the contents of the corresponding non-predicted prefetch register to the prefetch buffer.

In other aspects of the invention, the pipelined processor includes a branch processing unit with one or more of the following features: (a) a target cache organized for banked addressing, thereby facilitating split prefetching, (b) a target cache storing target addresses for predicted taken branches and a separate history cache storing history bits for predicted not-taken branches, (c) a return stack that, for both predicted and previously undetected calls, stores return target addresses which are pushed onto the stack when the call is detected by the branch processing unit or, if undetected, when the call is decoded -- in one embodiment, accesses for returns are directed to the return stack by including a return-stack select bit in the target cache, (d) a target cache in which the access tag length is selected to achieve a predetermined level of aliasing, and (e) a far target cache for predicting far target addresses for unconditional changes of flow (jumps, calls, returns).

An object of the invention is to provide an improved branch target buffer design that minimizes the performance impact of COF hazards. Specific objects of the invention include improving branch prediction (including reducing the penalty for misprediction) and calculating target addresses as early as practicable in the pipeline.

Embodiments of the invention may be implemented to realize one or more of the following technical advantages of the invention. The branch processing unit is accessed with the prefetch address, prior to decode of the branch instruction, thereby decoupling branch processing from instruction issue which is particularly advantageous as the number of execution pipes is increased beyond two. The target cache uses banked addressing to support split-prefetching. The target cache stores target addresses for predicted taken branches and unconditional COFs (together with associated history bits), while a separate history cache is used to store history bits for predicted not-taken branches, thereby taking advantage of the normal fall through to supply the target address, making more entries available in the target cache for storing predicted taken targets, and reducing the need to access multiple branches per prefetch. A return stack stores return target addresses for calls that are predicted (using the prefetch address) and previously undetected calls when they are decoded, thereby permitting return target addresses to be dynamically allocated to and recovered from the stack, and efficiently implementing target prediction for sequences of calls -- return accesses are directed to the return stack by including a return-stack select bit in the target cache. A far target cache is used in predicting far target (i.e., outside of the current code segment) changes of flow (far jumps, calls, returns) -- the far target cache stores limit and mode bits associated with far targets stored in the target cache, and is accessed indirectly through bits stored in the target cache. The tag length for the target cache is selected to achieve a predetermined level of aliasing (with associated performance degradation as a design trade-off).

For a more complete understanding of the invention, and for further features and advantages, reference is now made to the Detailed Description of an exemplary embodiment of the invention, together with the accompanying Drawings, it being understood that the invention encompasses any modifications or alternative embodiments that fall within the true scope thereof.

## BRIEF DESCRIPTION OF THE DRAWINGS

Figure 1a illustrates a superpipelined, superscalar microprocessor according to the invention.
Figure 1b illustrates the seven pipeline stages of the microprocessor, including X and Y execution pipes.
Figure 1c illustrates an idealized flow of instructions through the X and Y execution pipes.
Figure 2 illustrates an exemplary processor system design using the microprocessor.
Figure 3 illustrates the prefetch buffer, prefetcher, and branch processing unit.
Figures 4a - 4c illustrate prefetch operation in connection with COFs.
Figure 5a illustrates the branch processing unit including the target, history, and far target caches, return stack, and resolution logic.
Figure 5b illustrates the organization of the target cache.
Figures 6a and 6b illustrate write and read timing for the target cache.
Figures 6c and 6d illustrate write and read timing for the history cache.
Figure 7 illustrates a state diagram for the exemplary prediction algorithm.
Figure 8 illustrates speculation control in connection with the branch processing unit.
Figure 9 illustrates the control registers in the register translation unit, and in particular the checkpoint registers used to support speculative execution.
Figures 10a and 10b illustrate the function of the write buffers in connection with speculative execution, and in particular write buffer allocation and resolution (retire or invalidate) in storing and retiring speculative writes to memory.

## DETAILED DESCRIPTION

The detailed description of an exemplary embodiment of a branch processing unit according to the invention is organized as follows:

1. Exemplary Processor System
    1.1. Microprocessor
    1.2. Processor System
2. Branch Processing
    2.1. Terminology
    2.2. Prefetch
    2.2.1. COF Addressing
    2.2.2. COF Prefetching
    2.2.3. COF Confirmation
    2.3. Branch Processing Unit
    2.3.1. Target Cache
    2.3.2. History Cache
    2.3.3. Return Stack
    2.3.4. Far Target Cache
    2.3.5. Resolution Logic
    2.4. Branch Prediction
    2.5. Resolution and Repair
    2.5.1. Speculative Execution
    2.5.2. Resolution
    2.5.2. Repair

3. Conclusion

APPENDIX -- Actions Resulting From Branch Decoding

This organizational outline, and the corresponding headings used in this Detailed Description, are provided for convenience of reference only.

The exemplary branch processing unit is used to implement branch prediction and target addressing functions in a superscalar, superpipelined microprocessor compatible with the x86 instruction set architecture (ISA). Detailed descriptions of conventional or known aspects of microprocessor systems are omitted so as to not obscure the description of the invention with unnecessary detail. In particular, certain terminology related to the x86 computer architecture (such as register names, signal nomenclature, etc.) is known to practitioners in the field of microprocessor design. Moreover, the terms "branch processing unit" or "BPU" are used even though the exemplary BPU is used to provide target addressing for unconditional changes of flow (jumps, calls, returns) as well as branches.

## 1. Exemplary Processor System

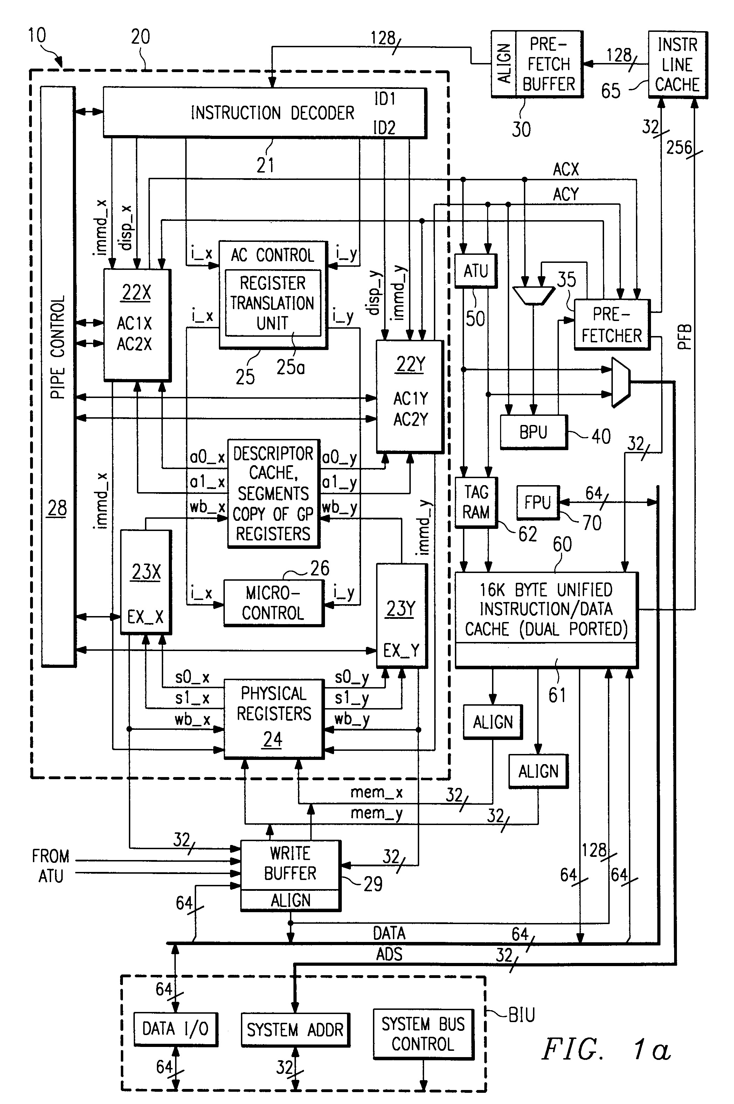

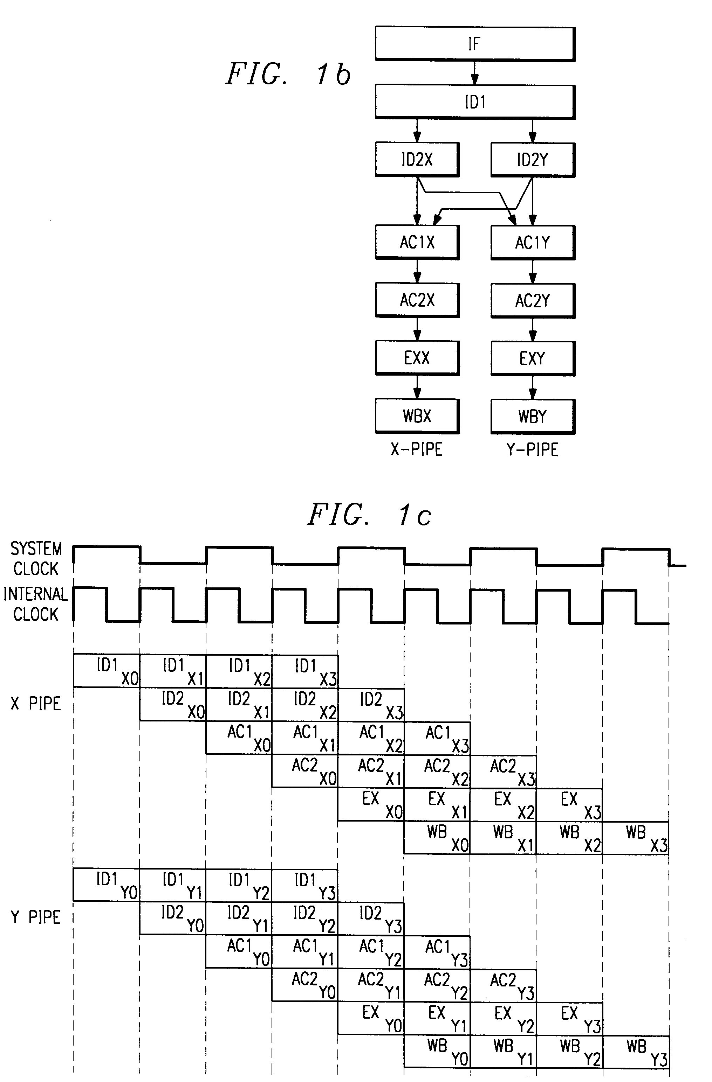

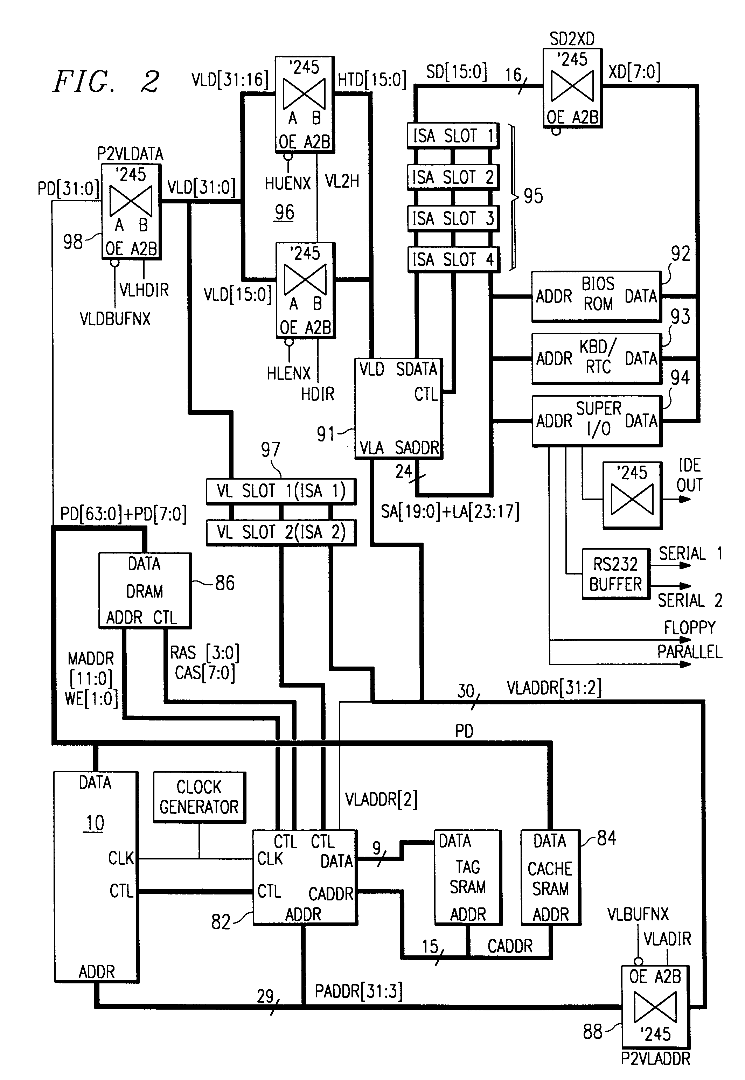

The exemplary processor system is shown in Figures 1a and 1b, and Figure 2. Figures 1a and 1b respectively illustrate the basic functional blocks of the exemplary superscalar, superpipelined microprocessor along with the pipe stages of the two execution pipelines. Figure 2 illustrates an exemplary processor system (motherboard) design using the microprocessor.

### 1.1. Microprocessor

Referring to Figure 1a, the major sub-blocks of a microprocessor 10 include: (a) CPU core 20, (b) prefetch buffer 30, (c) prefetcher 35, (d) BPU (branch processing unit) 40, (e) ATU (Address Translation Unit) 50, and (f) unified 16 Kbyte code/data cache 60, including TAG RAM 62. A 256 byte instruction line cache 65 provides a primary instruction cache to reduce instruction fetches to the unified cache, which operates as a secondary instruction cache. An onboard floating point unit (FPU) 70 executes floating point instructions issued to it by the CPU core 20.

The microprocessor uses internal 32-bit address and 64-bit data buses ADS and DATA. A 256 bit (32 byte) prefetch bus PFB, corresponding to the 32 byte line size of the unified cache 60 and the instruction line cache 65, allows a full line of 32 instruction bytes to be transferred to the instruction line cache in a single clock. Interface to external 32 bit address and 64 bit data buses is through a bus interface unit BIU.

The CPU core 20 is a superscalar design with two execution pipes X and Y. It includes an instruction decoder 21, address calculation units 22X and 22Y, execution units 23X and 23Y, and a register file 24 with 32 32-bit registers. An AC control unit 25 includes a register translation unit 25a with a register scoreboard and register renaming hardware. A microcontrol unit 26, including a microsequencer and microrom, provides execution control.

Writes from CPU core 20 are queued into twelve 32 bit write buffers 29 -- write buffer allocation is performed by the AC control unit 25. These write buffers provide an interface for writes to the unified cache -- noncacheable writes go directly from the write buffers to external memory. The write buffer logic supports optional read sourcing and write gathering.

A pipe control unit 28 controls instruction flow through the execution pipes, including keeping the instructions in order until it is determined that an instruction will not cause an exception, squashing bubbles in the instruction stream, and flushing the execution pipes behind branches that are mispredicted and instructions that cause exceptions. For each stage, the pipe control unit keeps track of which execution pipe contains the earliest instruction, and provides a stall output and receives a delay input.

BPU 40 predicts the direction of branches (taken or not taken), and provides target addresses for predicted taken branches and unconditional change of flow instructions (jumps, calls, returns). In addition, it monitors speculative execution in the case of branches and floating point instructions, i.e., the execution of instructions speculatively issued after branches which may be resolved as mispredicted, and floating point instructions issued to the FPU which may fault after the speculatively issued instructions have completed execution. If a floating point instruction faults, or if a branch is mispredicted (which will not be known until the EX or WB stage for the branch), then the execution pipeline must be repaired to the point of the faulting or mispredicted instruction (i.e., the execution pipeline is flushed behind that instruction), and instruction fetch restarted.

Pipeline repair is accomplished by creating checkpoints of the processor state at each pipe stage as a floating point or predicted branch instruction enters that stage. For these checkpointed instructions, all resources (programmer visible registers, instruction pointer, condition code register) that can be modified by succeeding speculatively issued instructions are checkpointed. If a checkpointed floating point instruction faults or a checkpointed branch is mispredicted, the execution pipeline is flushed behind the checkpointed instruction -- for floating point instructions, this will typically mean flushing the entire execution pipeline, while for a mispredicted branch there may be a paired instruction in EX and two instructions in WB that would be allowed to complete.

For the exemplary microprocessor 10, the principle constraints on the degree of speculation are: (a) speculative execution is allowed for only up to four floating point or branch instructions at a time (i.e., the speculation level is maximum 4), and (b) a write or floating point store will not complete to the cache or external memory until the associated branch or floating point instruction has been resolved (i.e., the prediction is correct, or the floating point instruction does not fault).

The unified cache 60 is 4-way set associative (with a 4k set size), using a pseudo-LRU replacement algorithm, with write-through and write-back modes. It is dual ported (through banking) to permit two memory accesses (data read, instruction fetch, or data write) per clock. The instruction line cache is a fully associative, lookaside implementation (relative to the unified cache), using an LRU replacement algorithm.

The FPU 70 includes a load/store stage with 4-deep load and store queues, a conversion stage (32-bit to 80-bit extended format), and an execution stage. Loads are controlled by the CPU core 20, and cacheable stores are directed through the write buffers 29 (i.e., a write buffer is allocated for each floating point store operation).

Referring to Figure 1b, the microprocessor has seven-stage X and Y execution pipelines: instruction fetch IF, two instruction decode stages ID1 and ID2, two address calculation stages AC1 and AC2, execution EX, and write-back WB. Note that the complex instruction decode ID and address calculation AC pipe stages are superpipelined.

The IF stage provides a continuous code stream into the CPU core 20. The prefetcher 35 fetches 16 bytes of instruction data into the prefetch buffer 30 from either the (primary) instruction line cache 65 or the (secondary) unified cache 60. BPU 40 is accessed with the prefetch address, and supplies target addresses to the prefetcher for predicted changes of flow, allowing the prefetcher to shift to a new code stream in one clock.

The decode stages ID1 and ID2 decode the variable length X86 instruction set. The instruction decoder 21 retrieves 16 bytes of instruction data from the prefetch buffer 30 each clock. In ID1, the length of two instructions is decoded (one each for the X and Y execution pipes) to obtain the X and Y instruction pointers - - a corresponding X and Y bytes-used signal is sent back to the prefetch buffer (which then increments for the next 16 byte transfer). Also in ID1, certain instruction types are identified, such as changes of flow, and immediate and/or displacement operands are separated. The ID2 stage generates completes decoding the X and Y instructions, generating entry points for the microrom and decoding addressing modes and register fields.

During the ID stages, the optimum pipe for executing an instruction is determined, and the instruction is issued into that pipe. Pipe switching allows instructions to be switched from ID2X to AC1Y, and from ID2Y to AC1X. For the exemplary embodiment, certain instructions are issued only into the X pipeline: change of flow instructions, floating point instructions, and exclusive instructions. Exclusive instructions include: any instruction that may fault in the EX pipe stage and certain types of instructions such as protected mode segment loads, string instructions, special register access (control, debug, test), Multiply/Divide, Input/Output, PUSHA/POPA (PUSH all/POP all), and task switch. Exclusive instructions are able to use the resources of both pipes because they are issued alone from the ID stage (i.e., they are not paired with any other instruction). Except for these issue constraints, any instructions can be paired and issued into either the X or Y pipe.

The address calculation stages AC1 and AC2 calculate addresses for memory references and supply memory operands. The AC1 stage calculates two 32 bit linear (three operand) addresses per clock (four operand addresses, which are relatively infrequent, take two clocks). Data dependencies are also checked and resolved using the register translation unit 25a (including register renaming hardware) -- the 32 physical registers 24 are used to map the 8 general purpose programmer visible logical registers defined in the X86 architecture (EAX, EBX, ECX, EDX, EDI, ESI, EBP, ESP).

The AC unit includes 8 architectural (logical) registers (representing the X86 defined register set) that are used by the AC unit to avoid the delay required to access in AC1 the register translation unit before accessing register operands for address calculation. For instructions that réquire address calculations, AC1 waits until the required data in the architectural registers is valid (no read after write dependencies) before accessing those registers. During the AC2 stage, source operands are obtained by accessing the register file 26 and the unified cache 60 with the physical address (for cache hits, cache access time for the dual ported unified cache is the same as that of a register, effectively extending the register set) -- the physical address is either the linear address, or if address translation is enabled, a translated address generated by the ATU 50.

Translated addresses are generated by the ATU 50 (using a TLB or translation lookaside buffer) TLB from the linear address using information from page tables in memory and workspace control registers on chip. The unified cache is virtually indexed and physically tagged to permit, when address translation is enabled, set selection with the untranslated address (available at the end of AC1) and, for each set, tag comparison with the translated address from the ATU (available early in AC2). Checks for any segmentation and/or address translation violations are also performed in AC2.

Instructions are kept in program order until it is determined that they will not cause an exception. For most instructions, this determination is made during or before AC2 -- floating point instructions and certain exclusive instructions may cause exceptions during execution. Instructions are passed in order from AC2 to EX (or in the case of floating point instructions, to the FPU) -- because integer instructions that may still cause an exception in EX are designated exclusive, and therefore are issued alone into both execution pipes, handling exceptions in order (i.e., maintaining precise exceptions) is ensured.

The execution stages EXX and EXY perform the operations defined by the instruction. Instructions spend a variable number of clocks in EX, i.e., they are allowed to execute out of order (out of order completion). Both EX stages include adder, logical, and shifter functional units, and in addition, the EXX stage contains multiply/divide hardware.

The write back stage WB updates the register file 24, condition codes, and other parts of the machine state with the results of the previously executed instruction. The register file is written in PH1 (phase 1) of WB, and read in PH2 (phase 2) of AC2.

Figure 1c illustrates a flow of eight instructions through the X and Y pipelines, idealized to illustrate the major advantage of pipelining -- increasing the number of instructions completed per clock without reducing the execution time of an individual instruction. As shown, no stage requires more than one internal clock cycle (2X the external clock) -- in actual operation, one or more stages may require additional clock cycles to complete, thereby changing the flow of instructions through the other pipe stages. Moreover, the flow of instructions through one pipeline may be dependent upon the flow of instructions through the other pipeline.

## 1.2. Processor System

Referring to Figure 2, for the exemplary embodiment, microprocessor 10 is used in a processor system that includes a single chip memory and bus controller 82. The memory/bus controller 82 provides the interface between the microprocessor and the external memory subsystem -- level two cache 84 and main memory 86 -- controlling data movement over the 64 bit processor data bus PD (the data path is external to the controller which reduces its pin count and cost).

Controller 82 interfaces directly to the 32-bit address bus PADDR, and includes a one bit wide data port (not shown) for reading and writing registers within the controller. A bidirectional isolation buffer 88 provides an address interface between microprocessor 10 and VL and ISA buses.

Controller 82 provides control for the VL and ISA bus interface. A VL/ISA interface chip 91 (such as an HT321) provides standard interfaces to a 32 bit VL bus and a 16 bit ISA bus. The ISA bus interfaces to BIOS 92, keyboard controller 93, and I/O chip 94, as well as standard ISA slots 95. The interface chip 91 interfaces to the 32 bit VL bus through a bidirectional 32/16 multiplexer 96 formed by dual high/low word [31:16]/[15:0] isolation buffers. The VL bus interfaces to standard VL slots 97, and through a bidirectional isolation buffer 98 to the low double word [31:0] of the 64 bit processor data bus PD.

## 2. Branch Processing

Referring to Figure 1a, Branch Processing Unit 40 provides target prefetch addresses for predicted taken branches (including loops) and unconditional change of flow (UCOF) instructions (jumps, calls, returns) -- for branches, the BPU monitors the execution of the branch to resolve branch predictions, and repair mispredictions. Recall that, for the X86 ISA, an instruction may be 1 to 15 bytes (average instruction length about 2.5 bytes), and that generally one of every four to six instructions is a COF.

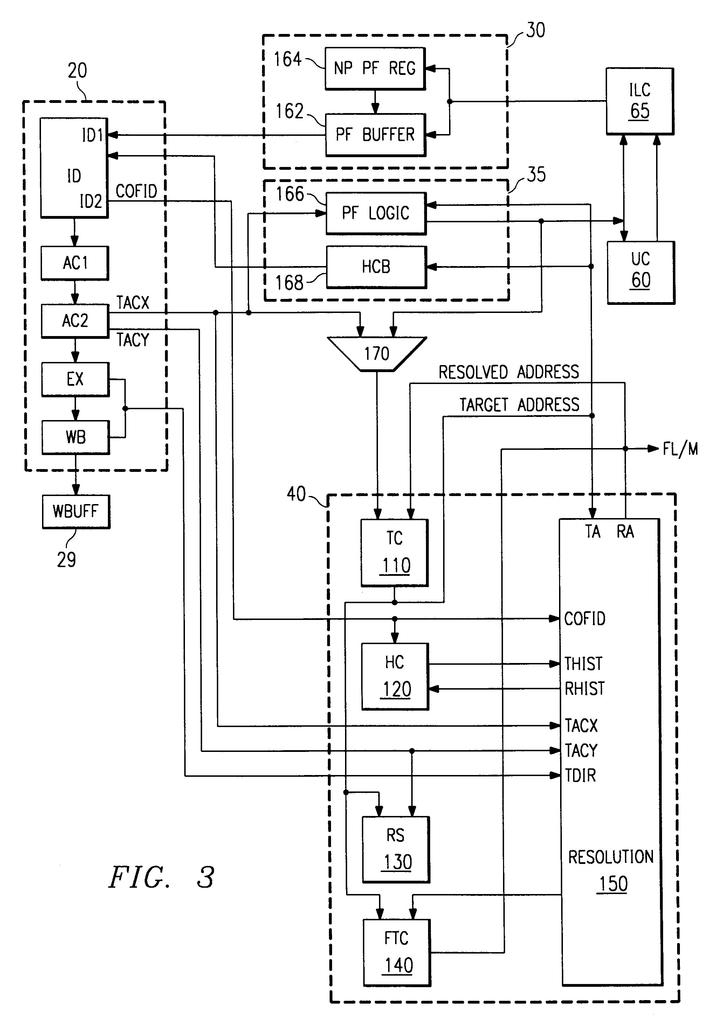

Figure 3a illustrates the functional blocks of the BPU 40. The BPU includes a target cache 110 for storing target addresses for UCOFs and predicted taken branches -- a history cache 120 stores history information for branches predicted not taken. A return address stack 130 stores target addresses for returns associated with calls stored in the target cache, while a far target cache 140 stores limits and mode bits for far targets stored in the target cache. Resolution logic 150 monitors branch execution, resolving branch predictions (in EX or WB) and repairing the execution pipeline in the case of mispredictions.

The BPU is accessed at prefetch time with the prefetch address. For accesses that hit in the BPU, the target address is supplied to prefetcher 35, which begins prefetching at the predicted target address, shifting the code stream in one clock as it enters the prefetch buffer 30. For accesses that miss in the BPU, if a COF is decoded at ID1, then (a) for UCOFs, the target address is supplied to the BPU and the prefetcher in AC2, and (b) for branches, a not-taken prediction is assigned (i.e., prefetch continues in the fall through direction).

In either case, the COF is allocated into the BPU resolution logic 150 when it issues from ID2. Branches will issue only if the speculation level due to outstanding (unresolved) branches (or floats) is three or less -- otherwise the branch will stall at ID2 and await resolution of an outstanding speculation instruction (i.e., a reduction in the speculation level). UCOFs and branches that are issued from ID2 are allocated into resolution logic which monitors and resolves COF execution, and if necessary, repairs the execution pipeline -- UCOFs are resolved by confirming at AC2 the actual target address, while branches are resolved by confirming at AC2 target address and confirming at EX or WB target direction.

## 2.1. Terminology

The following terminology will be used. COF instructions are either (a) "branches" which are conditional, or (b) "unconditional COFs or UCOFs" which are jumps, calls, returns. "Previously undetected COFs" are COFs for which the BPU does not have any information stored that would permit it to either (a) supply a target address, or in the case of branches, (b) predict that the branch will be taken or not taken. Branches that have been previously detected by the BPU, such that the BPU stores history information to predict the direction of the branch, are either (a) "predicted taken" and a target address supplied to change the direction of the code stream, or (b)"predicted not-taken" such that the code stream is allowed to continue in the not-taken (fall through) direction. Thus, detected branches have (a) a "predicted direction", and (b) a "not-predicted direction" (opposite the predicted direction).

The term "hit" used in conjunction with the BPU means that, in response to a prefetch access, the BPU detects a COF and supplies a target address to the prefetcher -- predicted taken branches and UCOFs. The term "miss" used in conjunction with the BPU means either (a) that a COF is undetected, or (b) that the BPU predicts that a branch will be not taken.

Speculative execution means speculatively issuing instructions past branches (or UCOFs) or floating point instructions (floats), and speculatively executing those instructions such that the processor state (instruction pointer, stack pointer, registers, condition codes, flags) changes. The term "speculation instruction" refers to either a branch (or UCOF) or a float (floating point instruction), while the terms "speculatively issued" and "speculatively executed" instructions refer to instructions that issue after a speculation instruction. A "speculation error" is a branch misprediction or floating point exception. Speculation instructions are retired if no speculation error results from their execution -- otherwise, the execution pipeline must be repaired by recovering the processor state at the time the speculation instruction issued. The "speculation level" means the number of unresolved speculation instructions that are outstanding at a given time.

## 2.2. Prefetch

Referring to Figures 1b and 3, in the IF stage, prefetcher 35 prefetches instruction bytes into prefetch buffer 30, which includes prefetch buffers 162 and NP (not-predicted) prefetch registers 164. Prefetcher 35 prefetches from either primary instruction line cache 65 or unified cache 60, providing a code stream to CPU core 20 (shown in more detail in Figure 1a). The NP prefetch registers are used to support prefetch in the not-predicted direction for branches.

Note that, for the exemplary X86 microprocessor, the prefetcher prefetches instruction bytes -- instruction boundaries are not defined until instruction decode in the ID stage.

The instruction line cache 65 is a fully associative primary instruction cache (lookaside to the secondary unified cache 60). It holds eight 32 byte lines, corresponding to the 32 byte (256 bit) cache line size in the unified cache -- a line fill over the 256 bit PFB from the unified cache is performed in a single clock. Prefetch buffer 162 holds 64 instruction bytes logically organized into eight 8 byte blocks BLK0-BLK7 -- each 16 byte prefetch is divided into 8 byte High and Low Prefetch Blocks, with the Low Block being the first 8 byte block returned in response to the prefetch. Prefetching is logically separated into High and Low Blocks to support split-prefetching when the BPU provides the target prefetch address.

Figure 4a enlarges prefetch buffer 162. BLK1 contains a jump J0 to a target T0 in BLK2. BLK4 contains a jump J1 to a target T1 in BLK5 -- BLK4 also contains a Target Tn, followed by a jump J2. Thus COF boundaries appear between BLK1/BLK2, and BLK4/BLK5. Whether a block is the Low or High Block of a prefetch is indicated below the block.

In response to the prefetch of BLK1 containing jump J0, the BPU provides Target T0 which is fetched in Low Block BLK2 (a target will always appear in the Low Block of a prefetch), creating the COF boundary BLK1/BLK2. The fetch continues with High Block BLK3. The prefetcher then increments to continue with Low Block 4, which contains jump J1 -- the prefetcher ignores the associated High Block returned in that prefetch, and instead switches immediately to the target address supplied by the BPU, fetching Low Block BLK5.

### 2.2.1. COF Addressing

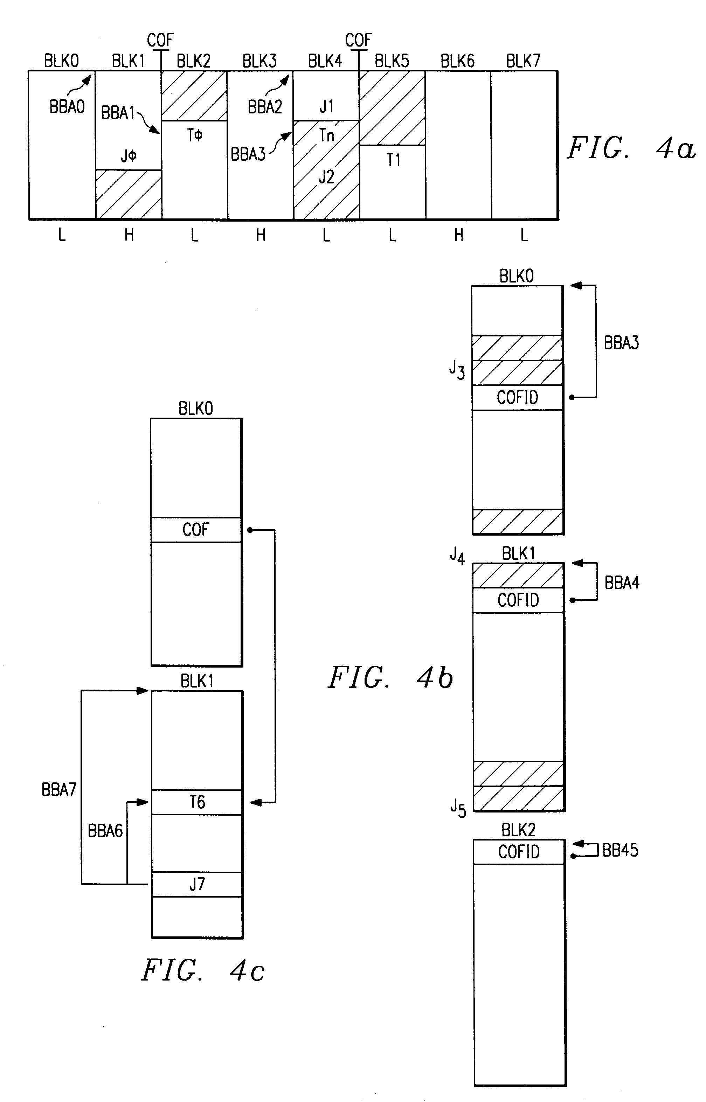

Figure 4a, along with Figures 4b and 4c, illustrate addressing for COFs for which the BPU supplies target addresses. The BPU supplies target addresses for UCOFs (jumps) and predicted taken branches (equivalent to jumps).

Associated with each COF is a basic block address BBA and a COF address COFID, which are piped along with the COF instruction through the pipe stages. The BBA identifies the 8 byte block in which the COF appears, while COFID is the location of the COF within a block. The BBA is used as the tag for a target address stored in the BPU target cache. The COFID is used as the tag for accessing the branch history cache.

Referring to Figure 4a, the BBA for a COF is the prefetch address for the 8 byte block containing the COF -- either the memory aligned Low/High Block address, or a target address in the case of a COF in the same block as the target with a higher address (i.e., the COF address follows in sequence the target address). High Block addresses always have their low 3 bits equal to zero. The low 3 bits of a Low Block addresses can be non-zero if the low bank address is also a target address. Thus,

(a) for BLK1 the BBA for J0 is BBA0 (aligned to the block address),
(b) for BLK2 the BBA for T0 is BBA1, the prefetch target address T0 (non-aligned),
(c) for BKL4 the BBA for J1 is BBA2 (aligned) and the BBA for J2 is BBA3, the prefetch target address for the target Tn (non-aligned).

For the jumps J0 in BLK1 and J1 in BLK4, the decoder will increment directly to the respective targets T0 in BLK2 and T1 in BLK5. Thus, the shaded portions of those blocks will be ignored by the decoder.

Referring to Figure 4b, the COF address is the address of the byte following the last byte of the COF. Thus,

(a) for jump J3 in BLK0, the corresponding COFID is the address of the next byte in the same 8 byte block,
(b) for Jump J4 which spans blocks BLK0 and BLK1, the COFID is in BLK1, thereby ensuring that the whole jump instruction will be fetched, and
(c) for Jump J5 which is at the end of the block BLK1 the COFID is the first byte of the next block BLK2, even though no bytes of the jump appear in that block.

The low 5 bits of the COFID are designated the COF location, and are stored as data in the target cache. The COF location is used to confirm decode of a BPU hit for a predicted taken branch or UCOF - if a COF is not decoded (i.e., not confirmed), the BBA is ignored, and no allocation is made to the resolution logic. If a COF is decoded, then the BBA is input to the resolution logic for use in target/direction resolution (see, Section 2.3.5).

Referring to Figure 4c, a COF can have more than one BBA depending on the direction in the code stream from which the COF is reached. The COF6 in BLK0 is a branch with a target T6 in BLK1, which also contains a jump J7. If COF6 is predicted taken, the resulting BPU hit will cause the prefetcher to prefetch in the taken direction to the target T6 in BLK1, and then continue to jump J7 -- in this case, the BBA for J7 is BBA6 (the non-aligned T6 address). Alternatively, if COF6 is predicted not-taken, the prefetcher will continue in the not-taken (fall through) direction, reaching J7 by incrementing into BLK1-- in this case, the BBA for J7 is BBA7 (aligned)..

## 2.2.2. COF Prefetching

Referring to Figure 3, for BPU hits, the BPU supplies the COF target address to the prefetcher 35, allowing prefetching into prefetch buffers 162 to switch to the target address in one clock. In addition, for branches, the NP prefetch registers 164 are used for speculatively prefetching in the not predicted (NP) direction: (a) for BPU hits, prefetch in the not-taken direction (i.e., the fall through), and (b) for BPU branch misses, prefetch in the taken direction (including where the miss results from a previously undetected branch assigned a not-taken prediction)..

The exemplary NP prefetch registers includes three 16 byte registers (for data). That is, one register for each of three branches -- up to three branches can be in the execution pipe (all branches are issued into the X pipe) before a branch resolves (AC2, EX, and WB). In addition, three registers hold target address, limits, and modes for accessing the BPU with the NP address.

Prefetcher 35 includes prefetch logic 166 and a hit confirmation buffer 168. In general, the prefetch logic increments the current prefetch address by 16, or changes instruction flow and prefetches from a COF target address supplied by: (a) the BPU, or (b) in the case of a BPU miss for an undetected UCOF, the target address from AC1 (the code flow does not change for branches that miss in the BPU which are assigned not-taken). The hit confirmation buffer is used by the prefetch logic to confirm that predicted COFs (UCOFs and predicted taken branches) are actually decoded, and to repair the prefetcher if a predicted COF is not confirmed (not decoded)..

Prefetch logic 166 fetches 16 instruction bytes (or 8 in the case of a Low Block only fetch) into the prefetch buffer 162 each clock in which the prefetch buffer has 16 byte locations available. In each prefetch, the prefetch logic accesses both the instruction line cache 65 and the unified cache 60 with the prefetch address (an instruction prefetch from the unified cache will stall for simultaneous data fetches). The prefetch address is not required to be memory aligned - the cache logic converts the prefetch address to an aligned access. A miss in the instruction line cache results in a 32 byte line fill.

In addition, prefetch logic 166 allocates NP prefetch registers 164, and prefetches in the not-predicted direction -- for each of up to three branches, a 16 byte NP register is allocated to allow a 16 byte prefetch in the NP direction. The NP registers are allocated at AC1, after decode/confirmation in ID. For BPU hits on predicted taken branches, after confirmation, prefetch starts in AC2 in the not-predicted fall through direction. For BPU misses on predicted not-taken branches or previously undetected branches assigned a not-taken prediction, prefetch in the not-predicted taken direction starts in AC2 after the branch target address has been calculated (AC1) and supplied to the prefetcher.

For the exemplary implementation, an 8 byte, Low Block only prefetch occurs when a prefetch target address is supplied by AC1, either in the case of an undetected UCOF or an NP (not-predicted) prefetch for an undetected or predicted not-taken branch. In these cases, the timing of the prefetch address from AC1 is such that there is not enough time to increment the Low Block address to generate the High Block address. Specifically, the address of the High Block is the address of the Low Block plus 8 -- the exemplary implementation uses a +8 incrementer off the Low Bank address (avoiding duplicating the logic generating the Low Bank address). Receiving the prefetch target address from AC1 does not leave enough time to both prefetch the Low Block and perform the incrementation to prefetch the High Block.

Prefetching in the not-predicted direction decreases the penalty for a mispredicted branch by one clock. That is, without prefetching in the not-predicted direction:

| Clk0 | Flush pipe in response to misprediction |
|---|---|
| Clk1 | Fetch not-predicted address (target or fall through) |

| Clk2 | ID1 - begin decode |
|---|---|

and with prefetching in the not predicted direction:

| Clk0 | Flush pipe in response to misprediction |
|---|---|
|  | Transfer NP register to prefetch buffer |
| Clk2 | ID1 - begin decode |

Prefetch logic 166 will increment the prefetch address (by 8 or 16) unless a COF is signaled by either BPU 40 or CPU core 20. During the IF stage, the BPU supplies prefetch addresses to signal a change of flow for BPU hits (predicted taken branches and UCOFs), as well as for mispredicted branches (repair after resolution). The CPU core will supply a prefetch address to the prefetcher in the case of: (a) a COF that misses in the BPU but is decoded (i.e., an undetected COF or a predicted not-taken branch), or (b) a special COF instruction inserted into the code stream (used to invoke exception or interrupt handlers). In particular, for undetected or predicted not-taken branches, the prefetch address supplied by the CPU core is used for prefetching in the not-predicted taken direction. For COFs that hit in the BPU but are not confirmed (for example, not decoded due to self-modifying code), the prefetcher is repaired from the confirmation buffer 168.

Prefetch buffer 162 is emptied by the instruction decoder in the ID stage -- 16 instruction bytes are retrieved from the prefetch buffer each clock. In ID1, the length of two instructions X and Y (one each for the X and Y execution pipes) is decoded, and a corresponding X and Y bytes-used signal is sent back to the prefetch buffer -- the prefetch buffer increments by X+Y for the next 16 byte transfer to the decoder.

Except for COFs that hit in the BPU, the incrementation through the prefetch buffer is controlled by the X+Y bytes-used signal from the decoder. For a BPU hit, where the target address should be the next instruction decoded after a COF, the prefetcher knows the COF address COFID and the target address, and therefore increments from the COF to the target address.

Referring to Figure 4a, for Jump J0, the prefetcher will increment from J0 in block BLK1 to T0 in block BLK2. The decoder may decode a COF as either the X or Y instruction, although it will always issue from ID2 in the X-pipe: (a) if the COF is the X instruction, then a prefetched target will be the paired Y instruction, and the target will issue into the Y-pipe, or (b) if the COF is the Y instruction, then the target will be transferred from the prefetcher in the next clock as the X instruction, and will issue into either pipe (i.e., the target may be switched from the X to the Y pipe in ID2).

Referring to Figure 3, when the BPU hits and provides a predicted target address, the prefetcher 35 immediately begins prefetching at the target address, switching the code stream into the prefetch buffer 30 in one clock.

| IF | Target fetch |
|---|---|
| | Allocate confirmation buffer |
| ID1 | Confirm COF |
| | Deallocate confirmation buffer |
| | Allocate NP register (branches) |
| AC2 | Prefetch in the NP direction (branches) |

When the BPU misses but a COF is decoded in ID1, prefetch depends on whether the COF is conditional or unconditional. For a UCOF:

| ID1 | Decode COF |
|---|---|
| | Flush PF buffer |
| | Flush Confirmation Buffer |
| ID2 | Issue COF |
| AC1 | Target supplied to Prefetcher |
| AC2 | Prefetch target |

For a branch:

| ID1 | Decode Branch |
|---|---|
| ID2 | Issue Branch - Predict Not-Taken |
| | Allocate NP Register |
| AC2 | Prefetch NP (Taken) direction |

A branch will be resolved by the BPU in EX or WB. If the branch is mispredicted, the BPU will: (a) repair the execution pipeline by flushing the pipeline behind mispredicted branch and recovering the processor state, and (b) repair the prefetcher by transferring the not-predicted address from the appropriate NP register to the prefetcher, restarting prefetch in the not-predicted direction.

## 2.2.3. COF Confirmation

For BPU hits, the hit confirmation buffer 168 is used to confirm that the corresponding COF (branch or UCOF) is actually decoded. Confirmation occurs at ID1, as the BPU hit is decoded. If a COF is not decoded, the confirmation buffer is used to repair the prefetcher. At the IF stage, the prefetch logic 166 allocates the confirmation buffer 168, storing both (a) the COF location (and the associated limit and mode) based on the BBA and COFID for the COF, and (b) the not-taken prefetch address (and associated limit and mode). The exemplary hit confirmation buffer 168 includes three entries, with each entry including control and date fields.

The control fields in the hit confirmation buffer are: use far / hit low / set [1:0] / far target index [3:0] /at limit high / at limit low / branch active. The limit and mode is stored to permit prefetcher repair for far COFs that are not confirmed.

The data fields in the hit confirmation are: COF location (location of predicted taken branch) [5:0] / not-taken prefetch address [31:0] / target address [31:0] / target limit [31:0] / not-taken prefetch limit [31:0] / target modes [31:0] / not-taken prefetch modes [8:0].

A pointer in the hit confirmation buffer 168 points to the next COF to be confirmed. For each confirmation, the confirmation buffer sends to the decoder the COF location and the target address (i.e., the next address to be transferred to the decoder after the COF ). Note that a confirmation buffer entry is allocated for each BPU hit, and there can only be one BPU hit in a prefetch block.

To confirm a COF, the decoder in effect matches the COF address with the address of the first byte following the COF by comparing the COF address to XCF and YCF according to:

XCF = IP + X-length

YCF = IP + X-length + Y-length

where XCF confirms that the X instruction, and YCF confirms the Y instruction.

This operation is difficult at higher clock rates because the decoder shifts off bytes it uses. If a COF is decoded, the decoder shifts all the way to the next instruction, shifting off all instruction bytes to the end of the Block containing the COF, and then shifting to the location of the target in the next Block (see, Figure 4a in connection with J0/T0). However, at high clock rates there may not be enough time to perform the ADD and COMPARE necessary for confirmation in the time required to beat the shift.

The exemplary microprocessor employs a faster method for confirming predicted branches. The initial steps are: (a) convert the 5 bit COF location (i.e., the low 5 bits of COFID) to a 32 bit one-hot field, and (b) rotate the COF location by the low 5 bits of the current ID1 instruction pointer (based on the X and Y length values generated by the decoder). The logic equations for these convert and rotate steps are:

LCOF = five 2_32 (COF_location[4:0])

LCMID = (LCOF, LCOF) >> ID-IP[4:0]

where LCOF is the COF location, LCMID is LCOF minus ID-IP, and ID-IP is the current ID1 instruction pointer. The rotate-shift (>>) is performed by a barrel shifter.

Confirmation involves: (a) selecting one of the LCMID bits when X-length becomes known (the first available form of X length is one-hot), and (b) selecting one of the LCMID bits when the Y length becomes known (the first available form of Y length is one-hot). Confirmation is signaled after the delay through the X and Y length one-hot selection logic.

For the exemplary embodiment, the one-hot selection logic for the X and Y lengths and the confirmation signals XCF and YCF is implemented conventionally using multiplexers. The one-hot X and Y length signals are used to select the corresponding LCMID one-hot field to provide one bit XCF and YCF confirmation signals (LCMID is a 12 bit field for XCF and a 16 bit field for YCF).

Use of this method reduces the delay in obtaining confirmation of a predicted COF.

Once a BPU hit is confirmed in ID1 (by the decoding of a COF), the corresponding COF entry in hit confirmation buffer 104 is deallocated, and the COF is allocated into the BPU (resolution logic 150 in Figure 3) in ID2. In general, information used for branch resolution is passed to the BPU through temporary registers (see, Section 2.3).

If a BPU hit is not confirmed, the prefetcher will restart prefetch at the address of the instruction after the purported COF instruction. It is not necessary to adjust the IP of the decoder because the decoder IP changes only on confirmation.

## 2.3. Branch Processing Unit

Referring to Figure 3, Branch Processing Unit 150 includes target cache 110, branch history cache 120, return address stack 130, and far target cache 140, together with resolution logic 150. The BPU is accessed through a multiplexer 170 with either (a) a prefetch address from prefetcher 35, or (b) for previously undetected COFs, a target address from AC1. Recall that COFs are issued into the X-pipe of the CPU Core 20 -- references to the various stages of the execution pipeline will be to the X-pipe unless the Y-pipe is specifically identified (for example, far COFs are designated exclusive instructions that use the Y-pipe to calculate the new limit).

Access with prefetch address is particularly advantageous for superscalar designs. It allows BPU operation to be decoupled from instruction issue, particularly as the number of execution pipes is increased beyond two.

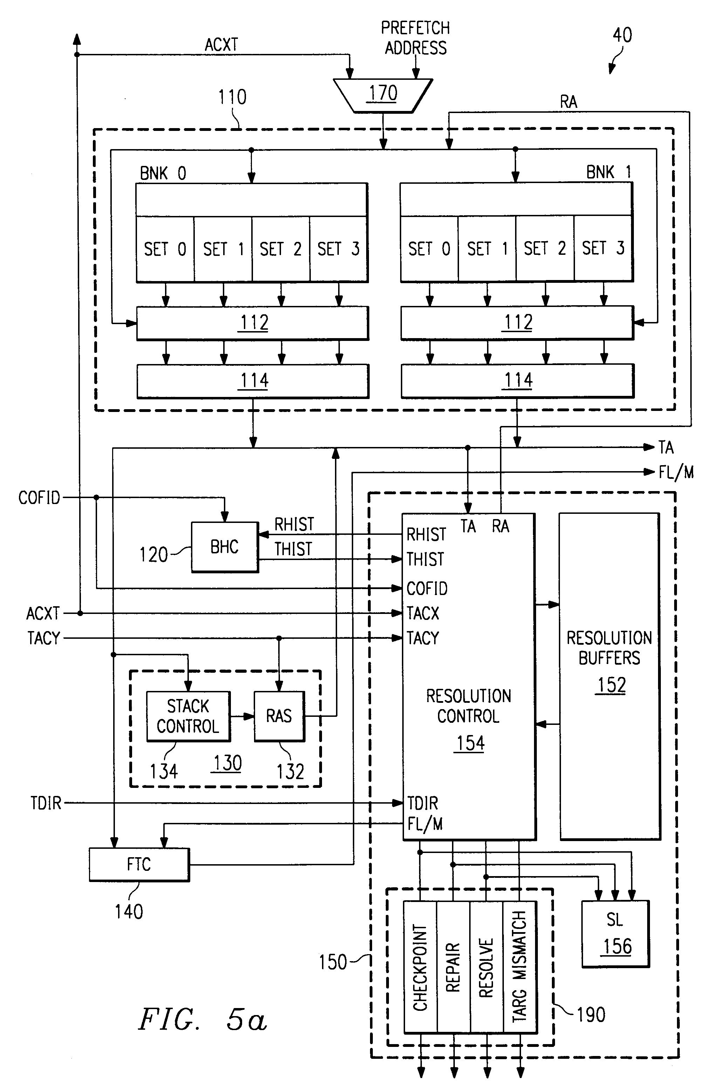

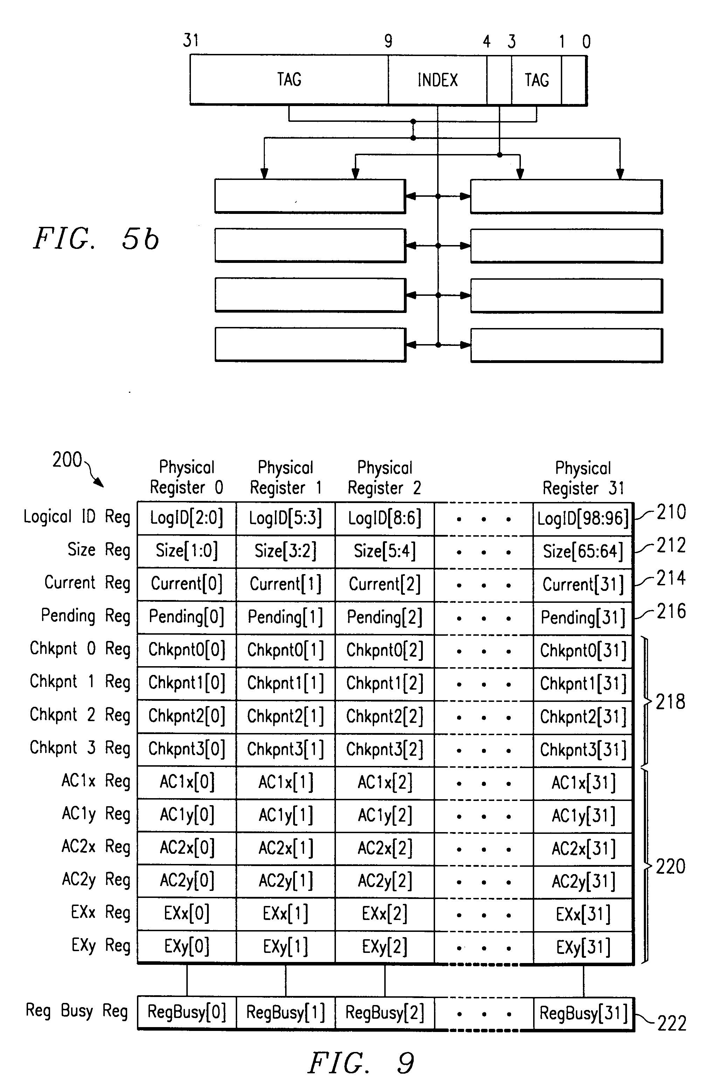

Referring to Figure 5a, the branch processing unit is shown in more detail. Resolution logic 150 includes resolution buffers 152 and resolution control 154 and speculation level logic 156.

BPU 40 receives the following signals from the various stages of the CPU core and the prefetcher (not shown):

| PF | Prefetch address |
|---|---|
| COFID | Linear address (instruction pointer) of a COF decoded in ID1 |
| TACX | Target linear address from AC1 in the X-pipe |
| TACY | Target linear address from AC1 in the Y-pipe |
| TDIR | Direction of a branch in EX or WB |
| ICOF | COF instruction interjected by AC or EX for exceptions and interrupts |

In addition, for far COFs (jumps, calls) the CPU core (AC1) provides a TMODES (Target Modes) signal to enable mode confirmation.

COFID is the address of a COF decoded in ID1, which is used for (a) accessing the history cache during ID2, and (b) allocating an entry in the resolution buffers 152, which controls storing entries into the target cache and the history cache. Entries are stored into the target cache:

(a) for a previously undetected UCOF, with TACX providing the target address,

(b) for a predicted not-taken branch if it is resolved taken, and the prediction algorithm indicates a change to predict taken, with the resolution logic providing the target address, and

(c) for a previously undetected branch (assigned weak not taken), if it is resolved as taken, with the resolution logic providing the target address.

Entries are stored into the history cache 120 (a) for predicted taken branches changed to predict not-taken, and (b) for previously undetected branches that are resolved not-taken which are assigned strong not-taken.

Recall that a COF can be decoded in ID1 as either the X or Y instruction, but are issued into the X-pipe. COFs decoded as the Y instruction are switched from ID2Y to AC1X.

TACX is used to provide a target address of a previously undetected UCOF supplied by ACX to the prefetcher and the BPU (resolution logic). It is also used to access the target cache in the same clock (through the multiplexer), which is required to handle the case of a COF in the same block as the target.

TACY is used for far COFs to provide the limit to the resolution logic. Far COFs are exclusive instructions, which can use the resources of both pipe stages -- ACX is used for address calculation, and ACY is used for the limit.

### 2.3.1. Target Cache

Referring to Figures 5a and 5b, the target cache 110 holds the target addresses of predicted taken branches and UCOFs. A COF target address is associated with a prefetch address -- up to eight COFs are stored per 16 bytes of instruction, with a different prefetch address assigned to each one. From Section 2.2.1, the prefetch address used in accessing the target cache is the basic block address BBA -- either a memory aligned Low/High Block prefetch address, or a target prefetch address supplied by the BPU.

The exemplary target cache is 4-way set associative, with 256 entries. Banking is used to support split prefetching, with each bank containing an 8 byte block of the 16 byte prefetch address.

For the exemplary BPU, each entry in the target cache is tagged with the full 32 bit BBA prefetch address: Bits[9:4] are used as an index to differentiate the entries in each set (1 of 64), and Bit 3 is used for bank selection (8 byte increments). Bits[31:10 and 3:1] are used as the tag.

The index is moved up to bits [9:4] to make more efficient use of the array. Referring to Figure 4a, the BBA for a COF will be block aligned (BBA0 and BBA2) for the 8 byte block containing the COF (i.e., the low three bits will be zero), except when the COF is reached through a target address such that the BBA is the address of the target (BBA1 and BBA3). Therefore, indexing using the low three bits of the BBA would effectively reduce the size of the target cache (with the effective reduction depending on the number of COFs in the code stream).

In addition to the tag and index bits, each target cache entry contains a 32 bit COF target address, together with:

(a) a history bit,

(b) five COF location bits,

(c) a RAS enable bit,

(d) three FTC indirection bits, and

(e) a valid bit.

When an entry is replaced, the replacement algorithm uses the tag bits to first guarantee that none of the four

14

tags in a bank is the same, and then will replace the least recently used set.

The history bit is used to predict the direction of a branch (see, Section 2.4). The exemplary embodiment uses a two bit prediction algorithm -- only one history bit is required to be stored in the target cache because it only stores taken predictions (the history cache stores the history for not-taken predictions). Specifically, the four states are:

| Strong Not-Taken | 00 |
|---|---|
| Weak Not-Taken | 01 |
| Weak Taken | 10 |
| Strong Taken | 11 |

Note that the most significant bit for the taken states is 1, and for the not-taken state is 0. Since the target cache only stores taken predictions and the history cache only stores not-taken predictions, only the least significant state bit need be stored to differentiate the four states.

The COF location bits identify the address of the COF (instruction pointer) relative to an 8-byte boundary. In confirming a COF, the decoder uses the COF location bits to determine when all of the bytes of the COF have been received (see, Figure 4c).

The RAS enable bit is used to enable the return address stack 130 for predicted returns (see, Section 2.3.3). This bit is stored in the entry for the associated call.

The FTC indirection bits are used to direct an access for a far COF to the far target cache 140, which stores the limit and mode bits for far COFs (see, Section 2.3.4). The target cache stores the target addresses for far COFs.

Referring to Figures 3 and 5a-b, the target cache 110 is accessed with (a) the BBA prefetch address, or (b) the target address of a previously undetected COF (over TACX) at the same time it is supplied to the prefetcher for fetching the target. NP requests are treated similarly -- fetches in the not-predicted direction are used to access the target cache, and the data associated with hits are stored in the associated NP registers for use in case of repair to the not-predicted path.

The index bits [9:4] select the appropriate entry (1 of 64) of each set in each bank, with bit 3 selecting the bank. That is, Bank0 contains target addresses for which the BBA (target cache access address) has a 0 in bit 3, addressing 8 bytes of the prefetch (Low or High Block). Either Bank0 or Bank1 can be accessed first to obtain the Low Block, with the other Bank providing the High Block.

Both banks of each set are selected -- eight tag and valid comparators 112 (four for each bank) detect a tag match for any set. Any one of the 8 tags can hit -- for the exemplary embodiment, hit selection is prioritized to select the Bank with the Low Block, and within that Bank to the sets in order Set 0 to Set 3.

For BPU hits, I/O logic 114 outputs the selected target address to the prefetcher and the resolution logic 150. The cache I/O logic also demultiplexes a resolved target address from the resolution logic for storing an entry into the target cache.

The target cache is updated by the resolution logic 150, with entries being replaced according to a modified LRU. Recall that BPU misses may result from either predicted not-taken branches (including previously undetected branches) or previously undetected UCOFs. For previously undetected UCOFs, a new entry will be allocated in the target cache. For branches - both predicted not-taken and previously undetected -- the decision to store the target address depends upon the branch prediction algorithm implemented by the resolution logic 150 in conjunction with the branch history cache 120 (see, Section 2.3.5).

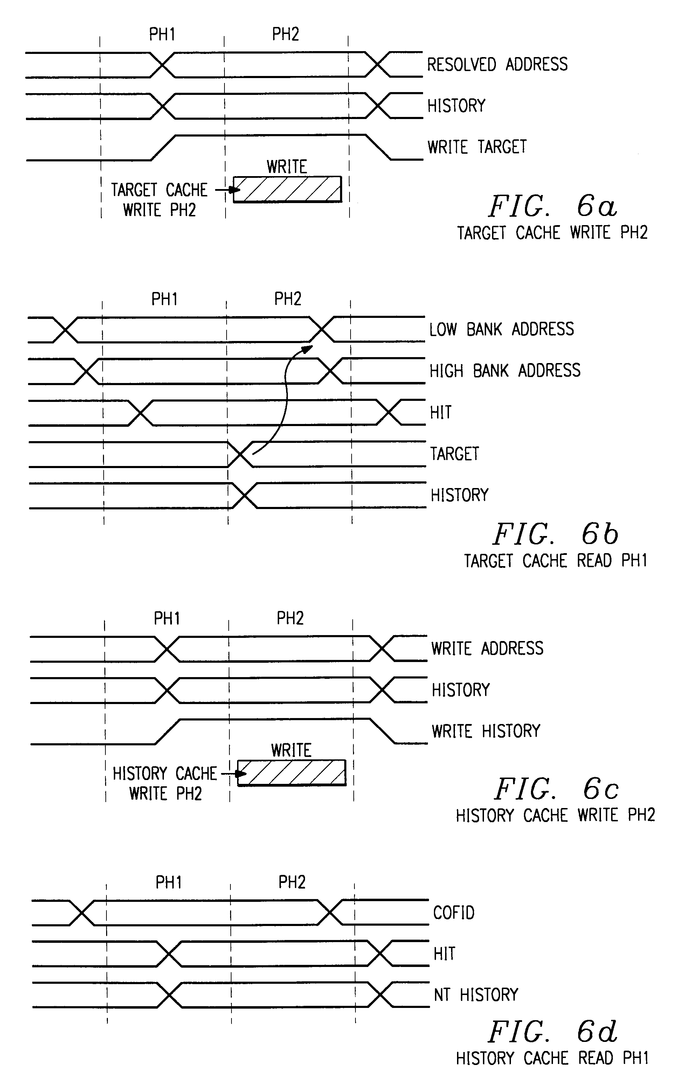

Figure 6a, illustrates the timing for the write protocol for the target cache. The resolution logic receives (a) the COF address and the associated BBA in ID2, (b) the target address in AC1, and (c) the target and direction from EX/WB.

For UCOFs, the target cache is written after (a) AC1 supplies the target address over TACX, and (b) all outstanding COFs have been retired -- the target cache will be written with a new entry in either AC2 (PH2) (if there are not outstanding COFs), or EX/WB (PH2). That is, for UCOFs, while the target is validated in AC1, an entry is not allocated into the target cache until the COF executes (i.e., is not flushed due to a repair attributable to a COF further down the execution pipe). Recall that COFs are issued only into the X-pipe, and so are retired in order.

For branches either predicted (taken or not-taken) or previously undetected (assigned weak not-taken), the target cache is written only after the branch is resolved in EX or WB. Resolution involves a comparison of both address and direction: (a) the predicted target address is compared to the actual (calculated) target address in AC2 (PH1), and (b) the predicted direction is compared to the actual direction in EX/WB (PH1). The target cache is written in EX/WB (PH2): (a) for correct taken predictions, the history bit might have to be updated, and (b) for incorrect weak not-taken predictions, a new entry is written with the target address and associated history bit.

In response to an exception or interrupt, AC or EX can initiate a change of flow by requesting ID to issue an ICOF instruction (a fake COF). Outstanding branches are flushed from the resolution logic and the execution pipes, and then an exception or interrupt handler can be invoked.

For the exemplary embodiment, the target cache is single ported. A dual ported cache would have certain advantages known to those skilled in the art, but would significantly increase complexity.

The BPU is flushed on reset. Moreover, if paging is enabled, the BPU could be flushed when the TLB (in ATU 50, Figure 1a) is flushed -- this operation is not required for proper functionality, but when the TLB is flushed, it can be assumed that every physical address stored in the BPU will produce an incorrect target and/or branch prediction, so that performance might be improved by starting with an empty BPU.

The exemplary target cache uses the full 32 bit prefetch address as a tag. The number of tag bits could be reduced by allowing aliasing -- having two target address entries match in their index and tag bits, but differ in the other bits of the address -- recognizing that a selected target address may be incorrect. That is, allowing aliasing would reduce the size of the target cache, but result in incorrect predictions. Performance degradation decreases significantlyas tag bits are added.

If aliasing is allowed, the target address from the BPU would have to be compared with the actual target address, computed in the AC pipe stage, for every COF. However, this complexity is required even if a full tag is stored, due to indirect jumps, and compatibility for self-modifying code.

## 2.3.2. History Cache

Referring to Figure 5a, the branch history cache 120 holds the history bits for branches predicted not-taken -- the BPU will miss on these branches. The history cache does not affect branch execution, but merely supplies history information to resolution logic 150 for use in determining whether to update the target cache 110.

The exemplary branch history cache is direct mapped, with 128 entries. Each entry is used to store one history bit for the predicted not-taken branch -- as described in connection with the target cache, only one history bit is needed for exemplary the two-bit prediction algorithm because the history cache is only used for predicted not-taken (weak or strong) branches. The history cache is indexed with COFID[7:1], with COFID[10:8] being used as a 3 bit tag. That is, for the exemplary embodiment, the history cache uses a reduced number of tag bits, which makes aliasing possible.

Referring to Figures 3 and 5a, branches that miss in the target cache 110 are decoded in ID1. The COF address is supplied over COFID in ID2 -- the 7 index bits select 1 of 128 entries. A tag and valid comparator (not shown) detects a tag match, and whether the entry is valid. The COF address will hit in the history cache for predicted not-taken branches (weak or strong), and the selected history bit will be provided to the resolution logic, for use in branch resolution during EX/WB.

The resolution logic 150 implements the exemplary branch prediction algorithm, and based on the current history and the actual direction of the branch, the resolution logic:

(a) for a correct not-taken prediction of a previously detected branch, may write a new history bit into the history cache (i.e., weak to strong),

(b) for a correct not-taken prediction for a previously undetected branch, write a new entry into the history cache with a strong not-taken history, or

(c) for a mispredicted not-taken branch, write a new entry into the target cache.

The resolution logic reads the history cache over THIST, and writes it over RHIST -- The history cache is written in EX/WB (PH2). Figures 6c and 6d illustrate the timing for the write and read protocols for the history cache.

Allowing aliasing in the history cache involves the same considerations as were discussed in connection with the target cache. For the exemplary embodiment, aliasing is permitted because the potential performance impact of aliasing is not as significant as that for the target cache, although this approach represents a design trade-off.

The BPU could have been designed to store predicted not-taken branches (and the associated history bits) in the target cache. However, by taking advantage of the normal fall through to supply the target address, more entries in the target cache are available for storing predicted taken branches (and UCOFs), thereby enabling more COFs to be predicted. Moreover, separating predicted taken and not-taken branches reduces the need to access multiple branches per prefetch, and helps alleviate the need for dual porting the target cache.

### 2.3.3. Return Address Stack

Referring to Figure 5a, the return address stack 130 holds the address of the instruction following near and far calls, which is used to predict the target address of the associated return.

To illustrate the advantage of the return address stack, consider the a sequence of printf calls:

```
printf ("%d", i)
printf ("%d", j)
printf ("%d", k)
```

If returns were stored in the BPU target cache, the return in each printf call would access the same location, because they are at the same location in the subroutine. However, the target cached would be for the instruction following the previous printf, and would be incorrect for the current one. A sequence of subroutine calls could fill the target cache with useless information.

The exemplary return address stack is 16 entries. Stack control logic 132 controls stack operation -- it is enabled for a given call-return pair either (a) by the RAS enable bit stored with an associated call entry in the target cache, or (b) for a previously undetected call, by the decode logic. That is, return target addresses are pushed onto the stack either: (a) when a call hits in the BPU during prefetch, or (b) for previously undetected calls, when a call is decoded in ID1.

Thus, the return target address for a call can be popped off the return address stack and provided to the prefetcher either: (a) when the return prefetch address hits in the BPU, or (b) for previously undetected calls, when the return address is decoded in ID1. In particular, the return address stack provides return target addresses the first time a call is seen, which has significant performance advantages while executing code that does not hit in the target cache.

The return stack implementation of the exemplary embodiment permits return target addresses to be dynamically allocated to and recovered from the stack. It is effective for both predicted calls that hit in the target cache, and for previously undetected calls that are decoded at ID1.

The exemplary return address stack stores predicted return targets, and associated limits and modes. For far calls, ACY provides the limit for far target returns (far calls being exclusive instructions in which the Y-pipe is used to calculate limits). Because the return stack has relatively few entries, the design choice was to include space in a single return stack for limits and modes, rather than have a separate cache (as was used for far jumps).

### 2.3.4. Far Target Cache

Referring to Figure 5a, the far target cache 140 holds the limit and mode bits for predicted far COFs (far jumps, calls, and returns). The use of a far target cache is advantageous because far COFs are unusual -- using a separate, indirectly accessed cache for limits and modes avoids having to expand the size of the target cache to accommodate limits and modes.

The far target cache is direct mapped with 16 entries. Each entry includes the limit and the mode for a far target address in the target cache. Four FTC bits are stored with the associated far target entry in the target cache, selecting the appropriate one of the 16 entries.

The far target cache is accessed by indirection. When the prefetch address for a far COF hits in the target cache 110, the target cache outputs the predicted target address to the prefetcher. At the same time, the FTC bits select the appropriate entry in the far target cache to supply the associated limits and mode bits.

When an entry in the far target cache needs to be replaced, the resolution logic implements a far target LRU as part of its LRU for the target cache.

### 2.3.5. Resolution Logic

Referring to Figures 3 and 5a, the BPU resolution logic 150 performs three basic functions: (a) Speculation Control including controlling the issue of branches and floating point instructions (speculation instructions), (b) COF Resolution including resolving predicted target addresses (branches and UCOFs) and predicted direction (branches), and (c) Pipeline Repair including controlling the restoration of checkpointed processor resources after a branch misprediction or a floating point exception. In addition, the resolution logic performs branch prediction including implementing an exemplary two-bit branch prediction algorithm (see, Section 2.5).

The basic functions of speculation control, COF resolution, and pipeline repair are discussed in Section 2.5. This subsection focuses on an exemplary logic implementation.

The resolution logic 150 includes resolution buffers 152, resolution control 154, and speculation level logic 156. The resolution buffers store information used for COF resolution and speculative execution. The resolution control: (a) reads and writes the target cache 110 and history cache 120, and writes the limits and modes into the far target cache 140, (b) allocates and deallocates the resolution buffers in connection issuing COFs and floats, and (c) controls COF resolution and pipeline repair.

The resolution control 154 receives the following inputs from the CPU core:

| COFID | Linear address (instruction pointer) of a COF decoded in ID1 |
|-------|---------------------------------------------------------------|
| TACX  | Target physical address from AC1 in the X-pipe |
| TACY  | Target physical address from AC1 in the Y-pipe |
| TDIR  | Direction of a branch in EX or WB |
| ICOF  | COF instruction interjected by AC or EX for exceptions and interrupts |

In addition, the CPU core supplies TMODES (target modes) for use in connection with far COFs.

Interface to the target cache 110, history cache 120, and far target cache 140 is as follows:

| TA    | Target Address received from the Target Cache |
|-------|------------------------------------------------|
| RA    | Resolved Target Address written into the Target Cache |
| THIST | History bit read from the History Cache |
| RHIST | Resolved history bit written to the History Cache |
| FL/M  | Far Limits and Modes for a far COF in the Target Cache |

In addition, the resolution logic receives inputs from the FPU that signal when a floating point instruction has either: (a) completed execution, or (b) faulted. These signals are used in speculation control (see, Section 3).

The resolution buffers 152 are allocated in ID2, and resolved in EX or WB. Subject to speculation control, resolution buffers are allocated for (a) branches, (b) UCOFs, and (c) Floats. Resolution buffers are allocated when the COF or float issues from ID2 -- if a buffer cannot be allocated because of the current speculation level (i.e., four outstanding branches or floats), then the instruction will stall at ID2 until an outstanding speculation instruction is resolved.

Resolution buffer 152 includes four entries, one for each of up to four unresolved COFs or floats (i.e., one for each speculation level). The resolution buffer includes both control and data fields. The control fields are:

| SET 1:0 | set to use in cache |
|---|---|
| THIST 3:2 | history to write back if branch is taken |
| NTHIST 5:4 | history to write back if branch is not taken |
| TARGM 6 | set when target has been validated |
| TARGMM 7 | set for predicted target mismatch |
| VALID 8 | valid bit |
| PAST_AC 9 | set when branch is past AC1 |
| UCOF 10 | set for UCOF |
| PTAKEN 11 | set if branch is predicted taken |
| FP 14 | set if float instruction checkpointed |
| MID 16 | set if mid pointer is past this entry |
| RETIRED 18 | set if entry retired |
| NOTARG 19 | set if no target for UCOF |
| CALL 20 | set if a call |
| RET 21 | set if a return |
| FAR 22 | set if a far jump |
| BBA 25:23 | basic block address |
| FTC 29:26 | index to the far target cache |

The data fields are:

| takena [31:0] | target address of COF |
|---|---|
| takenl [31:0] | target limit of COF |
| takenm [8:0] | target modes of COF |
| nta [31:0] | not taken adress of COF |
| ntl [31:0] | not taken limit of COF |
| ntm [8:0] | not taken modes of COF |

Three pointers are used to access entries in the resolution buffers. The first points to the next empty location, into which will be allocated the next speculation instruction to be decoded. The second pointer points to the next entry that has yet to have its target address resolved. The third pointer points to the next entry that has yet to have its direction resolved.

For each entry in the resolution buffer, the set number, index number, history bits, and target address are saved so that the target cache 110 can be written with updated history bits and possibly a new target (such as in the case of self modifying code or jump indirects), without rereading it. Re-reading the target cache upon resolution would complicate the BPU operation, and introduce a resource conflict.

Referring to Figure 3, for BPU hits, the resolution logic 150 works in conjunction with the hit confirmation buffer 168 in the prefetcher. A confirmation buffer is allocated at the IF stage, and then deallocated into a resolution buffer when the COF is confirmed at ID2. This functional division is a design choice -- the function of the hit confirmation buffer could have been incorporated into the resolution logic.

Thus, as implemented in the exemplary embodiment, the prefetcher repairs itself if a COF is not confirmed (i.e., before any instructions are speculatively issued), using the hit confirmation buffer. After a COF is confirmed, when speculative execution commences, the BPU takes over responsibility for repairing both the prefetcher and the ID stage.

## 2.4. Branch Prediction

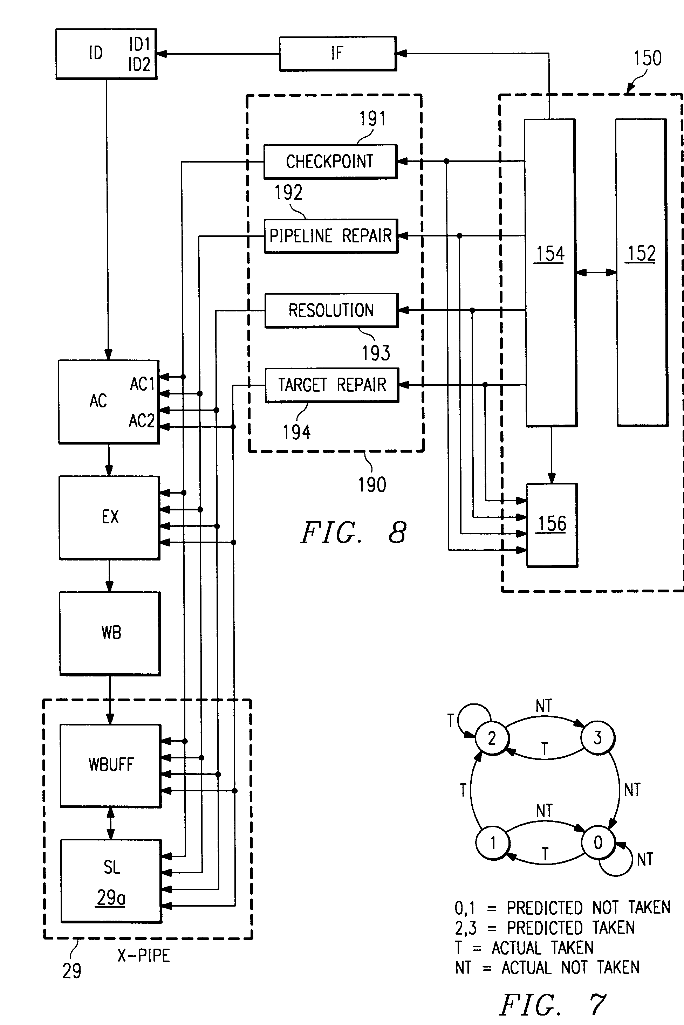

Referring to Figure 7, the exemplary branch prediction strategy uses two bits of history stored with each branch. The two bits encode the states 0 through 3 as shown in the diagram. States 0 and 1 will predict a branch not-taken, and states 2 and 3 will predict a branch taken.

The transitions between the states are determined by the actual behavior of the branch and is represented by T for taken and NT for not-taken. Two wrong predictions are required to change the prediction, and two are required to return to the previous prediction.

## 2.5. Resolution/Repair

Resolution and repair involves three basic functions: (a) Speculation Control including controlling the issue of branches and floating point instructions (speculation instructions), (b) COF Resolution including resolving predicted target addresses (branches and UCOFs) and predicted direction (branches), and (c) Pipeline Repair including controlling the restoration of checkpointed processor resources after a branch misprediction or a floating point exception.

The speculative execution of instructions past a branch or float may modify the processor state (processor resources) in ID, AC1 and EX. The contents of the register file are read in AC2 and used in EX, and the results are then written back in WB (PH1). Branches are resolved no later that WB (prior to any register file writeback) -- floats may fault after a subsequent speculatively issued instruction completes WB.

For the exemplary embodiment, speculative execution extends to writing speculative results into the register file, and reading those speculative results as speculative execution continues. Memory (cache) is not speculatively modified, but rather, writes (and floating point stores) for which a corresponding speculation instruction has not been resolved are queued into the (pre-cache) write buffers (29 in Figure 1a) -- these pending writes are retired as the outstanding speculation instruction is resolved.

If a branch is mispredicted (which will not be known until the EX or WB stage for the branch), or if a float faults (which may be tens or even hundreds of clocks after being issued to the FPU), then the execution pipeline must be repaired to the point of the faulting or mispredicted instruction (i.e., the execution pipeline is flushed behind that instruction), and instruction fetch restarted.

All processor resources that can be changed by speculatively issued instructions prior to the speculation instruction being resolved are checkpointed to allow the processor state to be repaired in the case of a speculation error. However, for the exemplary embodiment, not all processor resources are checkpointed -- certain resources that are only used by selected instructions that appear infrequently in the typical code stream are not checkpointed.

As a result of not checkpointing certain processor resources, issue constraints are placed on those non-checkpointed instructions, also referred to as speculation level zero (SLZ) instructions, that during execution will change non-checkpointed processor resources (see, Section 2.5.1). Selecting those resources to not checkpoint involves a design trade-off based on the logic required to checkpoint a resource and the frequency an instruction appears in a typical code stream -- that is, the performance penalty associated with stalling the execution pipeline for a non-checkpointed instruction that cannot be speculatively issued (or only issued subject to issue constraints) and the amount of additional resources required for checkpoint and repair associated with the instruction. Those skilled in the art will recognize that a different design trade-off could be made, resulting in different issue constraints.

For the exemplary embodiment, the processor resources that are checkpointed are:

**Table 1**

| ID | IP |
|----|----|
| AC1 | IP |
| | SP |
| | Register Translation Unit |
| EX | Condition Codes |
| | Application Flags |

Note that the AC (architectural) registers in the AC unit (see, Section 1.1) are not checkpointed --these registers need only be refreshed after a floating point exception (through a read and writeback of the general register file, which also updates the AC registers), but not after a misprediction. Normal instruction sequencing ensures that any branch passing (in the X-pipe) from EX to WB will resolve (WB) in time to abort any write to the AC registers (also in WB) by an adjacent (Y-pipe) speculatively issued instruction. Note also that the register translation unit maintains complete logical-to-physical mapping for the register file, including checkpoint registers (see, Section 3.1.2).

For the exemplary embodiment, the processor resources that are not checkpointed are:

| AC1 | Segment descriptor registers |
|-----|------------------------------|
| | Special Registers |
| EX | System Flags |

For the X86 ISA, special registers include registers for debug, control, test, and cache configuration. Instructions that change these resources during execution can be speculatively issued only under certain constraints.

### 2.5.1. Speculation Control

For the exemplary microprocessor, the BPU provides speculation control through (a) controlling the issue of COFs and floats, (b) controlling the checkpointing of processor resources, and in the case of a misprediction or floating point exception, (c) repairing the pipeline including restoring processor state.

For the exemplary embodiment, pipeline repair for speculatively executed instructions is implemented by creating checkpoints of the processor state at each pipe stage as a floating point or COF instruction enters that stage. For these speculation instructions, all resources (programmer visible registers, instruction pointer, condition code register) that can be modified by succeeding speculatively issued instructions are checkpointed into a specified checkpoint register.

For the exemplary embodiment, the principle constraints on speculative execution are: (a) speculative execution is allowed for up to four floating point or branch instructions at a time (i.e., the speculation level is maximum 4), and (b) a write or floating point store will not complete to the cache or external memory until the associated branch or floating point instruction has been resolved (i.e., the prediction is correct, or floating point instruction does not fault). In addition, for the exemplary embodiment, certain instructions are issued only if the speculation level is zero (for example, due to not checkpointing infrequently used processor resources such as segment descriptor registers).

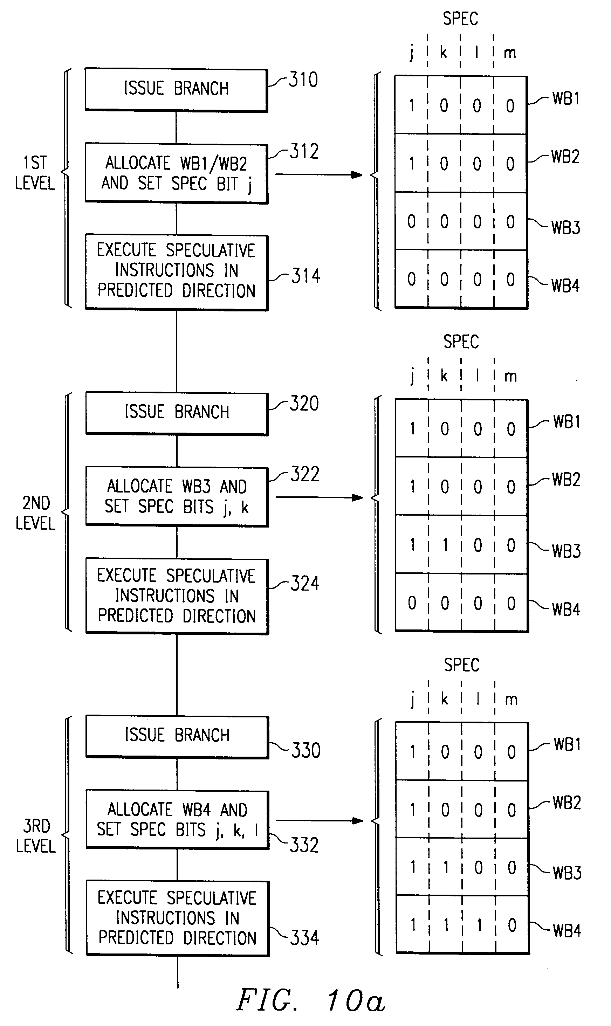

Referring to Figure 8, speculation control is provided by the BPU, and in particular by resolution logic 150. Resolution control 154 controls the allocation of the resolution buffers 152304, and the speculation level maintained by speculation level logic 156.

The speculation level logic identifies the current speculation level of the execution pipeline (which is derived from the valid bits for each of the resolution buffers). As outstanding speculation instructions are resolved, the speculation levels for the pipe stages are: (a) in the case of a retire, decreased, or (b) in the case of a branch misprediction or floating point exception, set to the lowest level in preparation for instruction restart (note that, if a speculative floating point instruction is outstanding, a subsequent branch misprediction need not affect that instruction, but only reduce the speculation level to the level of the branch).

Figure 8 illustrates only a single execution pipeline -- the BPU provides speculation control for both the X and Y pipes, with the implementation for both pipes being identical.

To support speculative execution, the resolution control 154 (a) controls the issue of speculation instructions through the allocation of resolution buffers 152, and (b) controls checkpointing of the processor state through the use of the four speculation control vectors 190: (1) checkpoint 191, (2) pipeline repair 192, (3) target mismatch repair 193, and (4) resolution 194. These vectors are output to the AC and EX stages of the execution pipeline, as well as the write buffers 29.

For the exemplary embodiment, resolution control 154 is also responsible for repairing the IF (prefetcher) and ID (decoder) stages after a mispredicted branch or floating point exception -- the associated instruction pointers are checkpointed into an allocated resolution buffer 152 for use in restoration during repair. After ID, AC1 and EX are the only pipe stages that have processor resources requiring checkpointing -- AC1 checkpoints the instruction and stack pointers and the register translation unit (25a in Figure 1a), while EX checkpoints the condition codes and applications flags.

In addition, the write buffers 29 queue writes to memory pending resolution of the associated speculation conditions. The write buffers include speculation level logic 29a that, in response to the speculation control vectors from resolution logic 154, retires queued writes by either (a) completing the write if a speculation condition is resolved, or (b) invalidating the write if repair is required.

## Speculative Issue.

Referring to Figure 8, assuming that the speculation level is less than maximum, a confirmed (decoded) COF or float is allocated to an available resolution buffer 152. Upon allocation, the speculation instruction issues from ID2 into the X-pipe. Speculative execution continues with the speculative issue of instructions past the speculation instruction.

When the speculation instruction issues from ID2, resolution control 154 pipes along with the instruction the checkpoint vector 191 to AC1 and EX. The checkpoint vector includes two fields:

| Allocate | Checkpoint Register ID |
|---|---|

In response, the pipe stage (AC1,EX) executing the speculation instruction checkpoints its modifiable resources to the checkpointed register specified by the Checkpoint Register ID.

The checkpoint vector is also input to write buffer speculation level logic 29a -- write buffers are allocated in AC2.

For the exemplary embodiment, certain issue constraints are required because: (a) the entire processor state is not checkpointed, (b) speculative execution is supported for two types of control hazard instructions -- branches (and UCOFs) and floats -- that involve significantly different speculative execution conditions, and (c) exceptions (including floating point exceptions) must be handled in program order. These issue constraints are: (a) the speculation level must be less than four for a branch (or UCOF) or float to issue, (b) a float will issue only if there is not an outstanding branch (i.e., in the branch resolution buffer), and (c) SLZ instructions will only be issued if the speculation level is zero. Note that multiple floats can be speculatively issued -- the exemplary FPU maintains a FIFO load queue, thereby ensuring that exception order will be maintained in the FPU.

Those skilled in the art will recognize that these issue constraints are a matter of design choice. In particular, the constraint on issuing floating point instructions is a matter of resolution buffer management for the exemplary implementation.

## Checkpointing.

Referring to Figure 1a, for the exemplary embodiment, the checkpoint registers are contained in the register translation unit 25a. In addition to ckeckpoint registers, the register translation unit includes register renaming hardware.

Figure 9 illustrates the exemplary checkpoint implementation. Translation control registers 200 are used by the register translation unit for register renaming and checkpointing. A Logical ID register 210 maps logical registers to physical registers. The Size register 212 stores a code corresponding to the size of the logical register to which the physical register is assigned.

The Current register 214 indicates the registers which are the most recently assigned for a given logical register. Thus, every time a new physical register is allocated, the current bit for the physical register which previously was the current register for the corresponding logical register is turned off and the current bit for the newly allocated register is turned on. Consequently, at any time, the Current register has eight bits on and twenty-four bits off. For each physical register, the Pending register 216 has a bit which indicates whether a write to that physical register is pending.

Four Checkpoint registers 218, Chkpnt0 - Chkpnt3, are used to store a copy of the Current register 214, each time a checkpoint occurs. In the exemplary embodiment, checkpoints occur whenever a branch or float is issued into AC1. The Checkpoint registers 218 are allocated on a rotating basis.

Checkpointing the stack and instruction pointers in AC1, and the condition codes and applications flags in EX is handled analogously.

**Speculation Level.**

Referring to Figure 8, for the exemplary embodiment, BPU resolution logic 150 and write buffers 29 include speculation level logic 156 and 29a respectively.

In the BPU, the speculation level is a function of the valid bits in the resolution buffers 152. The speculation level logic performs logical operations on the valid bits to determine the speculation level -- ANDing the bits is used to determine if a resolution buffer is available for a new speculation instruction (speculation level less than 4), while ORing the bits is used to determine if a speculation level zero instruction can issue. All four valid bits together form a 4 bit SPEC (speculation) vector that is included in the pipeline repair vector 192.

In the write buffers 29, the speculation level logic 29a maintains a 4 bit SPEC vector corresponding to the speculation level for each speculative write queued into the write buffer. In response to speculation control vectors 190 from the BPU, the write buffer speculation level logic assigns the appropriate speculation level to each write waiting to be retired.

AC and EX are able to store a single 4 bit SPEC vector. This vector is needed because the speculation level maintained by the BPU (i.e., the 4 valid bits of the resolution buffers) may not the same as that of AC and EX due to pipeline latency.

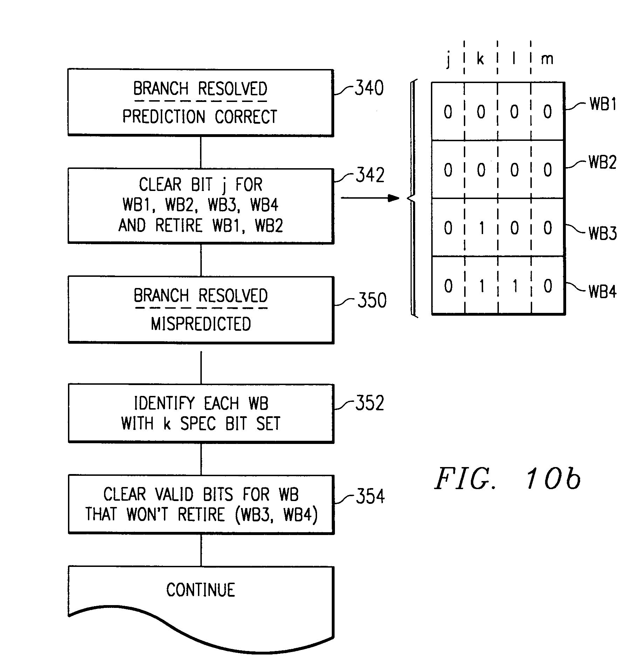

Figures 10a and 10b illustrate the operation of the write buffer speculation level logic in ensuring that the results of speculative writes are not retired to memory, and in removing the speculatively written data from the write buffer. Allocating speculative writes in the write buffers is discussed in this Section in connection with Figure 10a -- retiring speculative writes is discussed in Section 2.5.2. in connection with Figure 10b.

A branch (speculation instruction) issues (310) from ID2 to AC, which allocates (312) in AC2 two write buffer entries WB1,WB2 (the speculatively issued instructions in the predicted direction performing two write operations to memory, in this example). However, because the write operations to write buffer entries WB1,WB2 are speculative, at least one of the speculation control bits of the SPEC [jklm] vector is set during allocation, depending upon the speculation level of the write.

Thus, write buffer entries WB1,WB2 have their SPEC [j] bit set (indicating first order speculation). Write buffer entries WB3,WB4 are not yet allocated, and as such their speculation control bits are clear.

Speculative instructions in the predicted direction are executed (314), which will, if completed, effect the writes to the allocated write buffer entries WB1,WB2. Because the execution of these writes is speculative, however, the retire sequence includes a gating decision preventing the retiring of a write buffer entry unless its SPEC bits are all clear, thereby preventing the results of speculative execution from being written to memory.

Second level speculation occurs with the issue (320) of another branch. Second level speculation means that in order for the execution of the speculatively issued instructions for this branch to be successful, not only must that prediction (320) be correct, but also the first prediction (310)

Following issue of the second level branch (320), write buffer entry WB3 is allocated (322) in AC2. Since any write to write buffer entry WB3 is of second level speculation, both the j and k SPEC control bits are set. Instructions in the predicted direction of the branch are then issued and executed (324).

A third level of speculation is illustrated with respect to the issue of another branch (330) in the predicted direction of the original branch (310) and the second level branch (320).

**2.5.2. COF Resolution**

A COF is resolved when its actual target address has been calculated (AC1), and, in the case of branches, conditional dependencies determined to resolve direction prediction. A floating point instruction is resolved when it completes execution without faulting. For the exemplary embodiment, COF instructions are resolved in instruction order (COFs are allowed to resolve even though floats are outstanding).

Branches are resolved by resolving both the predicted target address and predicted direction. Thus, for BPU hits, the predicted target address is compared to the actual (calculated) target address in AC2, and then the predicted direction is compared to the actual direction in EX/WB. For BPU misses (either predicted or assigned not-taken), only the direction needs to be resolved in EX/WB.

UCOFs are validated through comparison of the predicted and actual target address in AC2. While no direction resolution is required, to maintain resolution order, resolution also requires that all outstanding speculation instructions be resolved.

Referring to Figure 8, if a COF or float is resolved such that repair is not required, resolution control 154 broadcasts to the AC and EX pipe stages and the write buffers 29 a resolution vector. This vector includes two fields:

| Deallocate | D[1:0] Index |
|---|---|

This resolution vector causes each pipe stage to deallocate one of four checkpoint registers, with the D Index identifying the checkpoint register to deallocate.

Figure 10b illustrates a branch speculation instruction being resolved with a correct prediction (340), allowing write buffer entries WB1,WB2 to be retired to memory. Thus, the SPEC [j] bit of all speculative write buffer entries WB1-WB4 are cleared (342). Since write buffer entries WB1,WB2 now have all of their speculation control bits SPEC [jklm] clear, these write buffer entries may be retired to memory.

### 2.5.3. Pipeline Repair

Pipeline repair after a branch (or UCOF) misprediction or floating point exception requires flushing the execution pipeline behind the checkpointed speculation instruction, and then restoring the checkpointed physical registers to recover the processor state. The exemplary microprocessor accomplishes repair from a mispredicted branch in a single clock.

Referring to Figure 8, resolution logic 150 effects a pipeline repair of a speculation error by broadcasting to the AC and EX pipe stages, and the write buffers 29, the pipeline repair vector 192. the pipeline repair vector has three fields

| SPEC [3:0] | Repair | R[1:0] Index |
|---|---|---|

The pipeline repair vector instructs the AC and EX pipe stages to flush the current instruction, and restore from the indexed checkpoint register. In addition, the 4 bit SPEC vector is used by the write buffer speculation level logic 29a to adjust its SPEC status, invalidating those writes affected by the speculation error. A repair after a floating point exception will typically require flushing the entire execution pipeline, while for a mispredicted branch there may be a paired instruction in EX and two instructions in WB that would be allowed to complete.

A special case of a repair is for a target mismatch. For either predicted taken branches or UCOFs, if a comparison of the predicted target address with the actual target address calculated in AC1 indicates a mismatch, the BPU will immediately signal to AC a target mismatch with the target mismatch repair vector -- instructions in EX and WB will be allowed to complete execution. This vector has two fields:

| TMM | SPEC [3:0] |
|---|---|

The target mismatch vector instructs AC to flush the current instruction, and to adjust its speculation status accordingly using the 4 bit SPEC vector.

Referring to Figure 9, checkpoint restore is accomplished by copying the Checkpoint register 218 associated with the branch for floating point instruction to the current register, restoring the state of the IP/SP and the physical registers to the state which existed immediately prior to the speculation instruction.

Figure 10b illustrates the affect of a repair on speculative writes in the write buffers that result from the second and third level branch instructions when the second level branch (320) is mispredicted. Detecting a mispredicted branch (350) means that if the writes to the allocated write buffer entries WB3,WB4 have not yet been performed, these writes will never be performed. If these writes have been performed (i.e., these write buffer entries are pending), the data should not be written to memory. Accordingly, write buffer entries WB3,WB4 must be cleared for additional use, without retiring their contents to memory.

Those write buffer entries identified (346) as having their SPEC [k] bit set are entries WB3 (second level speculation) and WB4 (third level speculation). The valid bits for these entries are cleared (354), such that entries WB3,WB4 may be reallocated, and will not be retired. Retire pointers point to the ones of write buffer entries WB1-WB4 next to be retired, such that when the associated retire pointer points to entries WB3,WB4, these entries will be skipped (as though they were never allocated). This allows the retire pointers to "catch up" to the allocation pointers if their section of write buffer is empty. Repeated checking of the valid bits in the retire process can then safely stop, once the empty condition has been met.

## 3. Conclusion

Although the Detailed Description of the invention has been directed to certain exemplary embodiments, various modifications of these embodiments, as well as alternative embodiments, will be suggested to those skilled in the art. For example, specific register structures, mappings, bit assignments, and other implementation details are set forth solely for purposes of providing a detailed description of the invention.

Logic is generally used in the hardware sense, recognizing that implementations involving microcode or other software routines would be equivalent. Cache organization (set associative/direct mapped) is a design choice.

Various modifications based on trade-offs between hardware and software logic will be apparent to those skilled in the art. Also, the specific address nomenclature (linear address, effective address, segment base, relative base, etc.) is conventional for the x86 architecture, and is used for the purpose of describing the exemplary embodiment only.

The invention encompasses any modifications or additions to the described embodiments and alternative embodiments that fall within the scope thereof.

## APPENDIX

### Actions Resulting From Branch Prediction

BPU Hit, Target Match, Predicted Taken, Prediction Correct

Following branch decode:

    Access Icache with BPU target address

        Kill current instructions being decoded in ID (on the default not taken path)

        Invalidate all bytes in the prefetch buffer

        Save not taken address in the resolution buffer

        Save target address in the resolution buffer

When the branch is resolved:

    Write the BPU with the updated history bits


Hit, Target Match, Predicted Taken, Prediction Incorrect

Following branch decode:

    Prefetch with BPU target address

    Abort current instructions being decoded in ID (on the default not taken path)

    Invalidate all bytes in the prefetch buffer

    Save not taken address in the resolution buffer

    Save target address in the resolution buffer

When the branch is resolved:

    Write the BPU with the updated history bits

    Prefetch with the not taken address (saved from original access)

    Invalidate all bytes in the prefetch buffer

    Abort all instructions in the pipe which followed the branch

    Flush the Resolution Buffer


Hit, Target Match, Predicted Not Taken, Prediction Correct

Following branch decode:

    Save taken address in the resolution buffer

When the branch is resolved:

    Write the BPU with the updated history bits


Hit, Target Match, Predicted Not Taken, Prediction Incorrect

Following branch decode:

    Save taken address in the resolution buffer

When the branch is resolved:

Write the BPU with the updated history bits

Prefetch with the taken address (saved from the original access)

Invalidate all bytes in the prefetch buffer

Kill all instructions in the pipe which followed the branch

Flush the Resolution Buffer

Hit, Target Mismatch, Predicted Taken, Prediction Correct

Following branch decode:

Prefetch with BPU target address

Abort current instructions being decoded in ID (on the default not taken path)

Invalidate all bytes in the prefetch buffer

Save not taken address in the resolution buffer

Save target address in the resolution buffer

When the branch is resolved:

Write the BPU with the updated history bits

Write the BPU with the new target address

Access the Icache with the new target address

Invalidate all bytes in the prefetch buffer

Abort all instructions in the pipe which followed the branch

Flush the Resolution Buffer

Hit, Target Mismatch, Predicted Taken, Prediction Incorrect

Following branch decode:

Prefetch with BPU target address

Abort current instructions being decoded in ID (on the default not taken path)

Invalidate all bytes in the prefetch buffer

Save not taken address in the resolution buffer

Save target address in the resolution buffer

When the branch is resolved:

Write the BPU with the updated history bits

' Write the BPU with the new target address

Access Icache with the not taken address (saved from original access)

Invalidate all bytes in the prefetch buffer

Abort all instructions in the pipe which followed the branch

Flush the Resolution Buffer

Miss, Predicted Not Taken, Prediction Correct

Following branch decode:

Save entry to replace in resolution buffer

When the branch is resolved:

Do not add this branch to the BPU (only add taken branches)

Miss, Predicted Not Taken, Prediction Incorrect

Following branch decode:

Save entry to replace in resolution buffer

When the branch is resolved:

Write the BPU with the updated history bits

Write the BPU with the new target address

Prefetch with the new target address

Invalidate all bytes in the prefetch buffer

Abort all instructions in the pipe which followed the branch

Flush the Resolution Buffer

Miss, Predicted Taken, Prediction Correct

Following branch decode:

Save entry to replace in resolution buffer

When the branch is resolved:

Write the BPU with the updated history bits

Write the BPU with the new target address

Access the Icache with the new target address

Invalidate all bytes in the prefetch buffer

Abort all instructions in the pipe which followed the branch

Flush the Resolution Buffer

## Claims

1.  A pipelined processor including an instruction fetch stage that prefetches instruction bytes (each with an associated address) and an instruction decode stage that decodes the instruction bytes to obtain instructions of variable length, including COF (change of flow) instructions that specify a target address, comprising:

    (a) prefetch means for generating prefetch addresses to fetch instruction bytes from a memory, the instruction bytes being fetched sequentially unless the prefetch means is directed to change the instruction flow by switching to an out-of-sequence prefetch address;

    (b) the prefetch means including a prefetch buffer for storing a plurality of instruction bytes received from the memory in response to prefetch addresses generated by the prefetch means;

    (c) processor core means for executing instructions;

    (d) the processor core means including decode means for receiving instruction bytes from the prefetch buffer and decoding instructions;

    (e) branch processing means including a target cache for storing a plurality of predicted target address-

28

es each corresponding to a COF instruction for which the branch processing means predicts a target address; and

(f) the branch processing means tagging each predicted target address with an access tag corresponding to a prefetch address associated with the corresponding COF;

(g) the branch processing means, in response to prefetch addresses from the prefetch means, accesses the target cache with corresponding access tags, and in the case of a hit, provides the associated predicted target address to the prefetch means; wherein

(h) the prefetch means, in response to a predicted target address from the branch processing means, generates a corresponding prefetch address to fetch the corresponding instruction bytes, thereby changing instruction flow to the predicted target address.

2. The pipelined processor of Claim 1, wherein the branch processing means stores predicted target addresses for unconditional COFs and predicted taken branches.

3. The pipelined processor of Claim 1 or Claim 2, wherein, for branches, the branch processing means includes prediction means for predicting branch direction based on the branch history, with previously undetected branches being predicted not-taken.

4. The pipelined processor of Claim 3, wherein the branch processing means includes a history cache that stores history information for branches that are previously detected but predicted not-taken.

5. The pipelined processor of Claims 1-4, wherein each prefetch address generated by the prefetch means fetches a block of instruction bytes, with each block being specified by either an aligned prefetch address corresponding to a predetermined initial byte the block, or a target address within the block, and wherein a COF is identified by:

(a) a basic block address corresponding to either (i) the aligned prefetch address for the block containing the COF, or (ii) a target address within the block containing the COF where the COF is reached by sequencing through the block starting with the target address, and

(ii) a COF location identifying the location of the COF within a block.

6. The pipelined processor of Claim 5, wherein the access tag for a predicted target address stored in the target cache corresponds to the basic block address for the associated COF.

7. The pipelined processor of Claims 1-6, wherein the prefetch means includes COF confirmation means for confirming that, for each prefetch address that results in a hit in the target cache such that the branch processing means provides a predicted target address to the prefetch means, the decoder means decodes a COF at the specified COF location.

8. The pipelined processor of Claims 1-7, wherein the branch processing means includes branch resolution means for monitoring the execution by the processor core of COFs for which the branch processing means provides a predicted target address, to determine whether (i) the predicted target address is the same as the actual target address, and, (b) for branches, whether the predicted direction is the same as the actual direction.

9. The pipelined processor of Claim 8, wherein the prefetch means includes

(a) not-predicted prefetch registers that store, for each of a predetermined number of branches, a predetermined number of instruction bytes in not-predicted direction of the branch;

(b) in response to a determination by the branch resolution means that a branch is mispredicted, the prefetch means transfers the contents of the corresponding non-predicted prefetch register to the prefetch buffer.

10. The pipelined processor of Claim 7, wherein the branch processing means includes:

(a) speculation control means for causing, for each decoded branch, the processor core means to checkpoint the state of the processor core means at the point where the branch begins execution,

(b) such that instructions after the branch can be speculatively executed prior to resolution of the branch;

(c) the speculation control means including speculation level means for ensuring that the total number of unresolved branches being executed by the processor core means does not exceed a maximum speculation level; and

(d) the speculation control means including processor core repair means for restoring, in the case of a mispredicted branch, the corresponding checkpointed state of the processor core.

11. A method of implementing branch processing in a pipelined processor including an instruction fetch stage that prefetches instruction bytes (each with an associated address) and an instruction decode stage the decodes the instruction bytes to obtain instructions of variable length, including COF (change of flow) instructions that specify a target address, comprising the steps:

(a) generating prefetch addresses to fetch instruction bytes from a memory, the instruction bytes being fetched sequentially unless the prefetch means is directed to change the instruction flow by switching to an out-of-sequence prefetch address;

(b) decoding instruction bytes into instructions, including COF instructions;

(c) storing a plurality of predicted target addresses each corresponding to a COF instruction, each predicted target address being tagged with an access tag corresponding to a prefetch address associated with the corresponding COF;

(d) in response to prefetch addresses, accessing the stored predicted target addresses with corresponding access tags, and

(e) in the case of a hit, generating a corresponding prefetch address to fetch the corresponding instruction bytes, thereby changing instruction flow to the predicted target address.

12. The method of implementing branch processing of Claim 11, wherein predicted target addresses are stored for unconditional COFs and predicted taken branches.

13. The method of implementing branch processing of Claim 11 or Claim 12, further comprising the step of predicting branch direction based on the branch history, with previously undetected branches being predicted not-taken.

14. The method of implementing branch processing Claim 13, wherein predicted target addresses are stored in a target cache, and branch history for predicted not-taken branches is stored in a separate history cache.

15. The method of implementing branch processing of Claims 11-14, further comprising the step of confirming that, for each prefetch address that results in a predicted target address being used to generate a prefetch address, a corresponding COF at a specified COF location is actually decoded.

16. The method of implementing branch processing of Claims 11-15, further comprising the steps of: monitoring the execution of COFs for which a predicted target address has been used to generate a prefetch address, to determine whether (a) the predicted target address is the same as the actual target address, and, (b) for branches, whether the predicted direction is the same as the actual direction.

17. The method of implementing branch processing of Claims 11-16, further comprising storing, for each of a predetermined number of branches, a predetermined number of instruction bytes in not-predicted direction of the branch, and in response to a determination that a branch is mispredicted, decoding such stored instruction bytes in the not-predicted direction, and continuing with the step of generating prefetch addresses.

18. The method of implementing branch processing of Claims 11-17, further comprising the steps of:

(a) for each decoded branch, checkpointing processor state at the point where the branch begins execution,

(b) such that instructions after the branch can be speculatively executed prior to resolution of the branch;

(c) ensuring that the total number of unresolved branches being executed by the processor core means does not exceed a maximum speculation level; and

(d) in the case of a mispredicted branch, restoring the corresponding checkpointed processor.

19. A pipelined processor including an instruction fetch stage that prefetches instruction bytes (each with an associated address) and an instruction decode stage the decodes the instruction bytes to obtain instructions of variable length, including COF (change of flow) instructions that specify a target address, comprising:

(a) prefetch means for generating prefetch addresses to fetch instruction bytes from a memory, the instruction bytes being fetched sequentially unless the prefetch means is directed to change the instruction flow by switching to an out-of-sequence prefetch address;

(b) the prefetch means including a prefetch buffer for storing a plurality of instruction bytes received from the memory in response to prefetch addresses generated by the prefetch means;

(c) processor core means for executing instructions;

(d) the processor core means including decode means for receiving instruction bytes from the prefetch buffer and decoding instructions;

(e) branch processing means including (i) a target cache for storing a plurality of predicted target addresses each corresponding to a COF instruction for which the branch processing means predicts a target address, and one or both of (ii) a return stack for storing return target addresses corresponding to both predicted and previously undetected calls, and (iii) a far target cache for storing a plurality of far target limits and modes for far target addresses stored in the target cache;

(f) the branch processing means tagging each predicted target address with an access tag corresponding to a prefetch address associated with the corresponding COF, and for far target addresses, associating with each predicted far target address an indirect addressing code identifying in the far target cache the associated limits and modes;

(g) for the return stack, the branch processing means pushing a return target address on the return stack when the call is detected by the branch processing means or, if undetected, when the call is decoded by the decode means;

(h) the branch processing means, in response to prefetch addresses from the prefetch means, accesses the target cache with corresponding access tags, and in the case of a hit, provides (i) the associated predicted target address to the prefetch means, either from the target cache, or in the case of a return, from the return stack, and (ii) in the case of a far target address, the corresponding limits and modes;

(i) the prefetch means, in response to a predicted target address from the branch processing means, generates a corresponding prefetch address to fetch the corresponding instruction bytes, thereby changing instruction flow to the predicted target address.

FIG. 1a

*FIG. 1b*

IF

ID1

ID2X | ID2Y

AC1X | AC1Y

AC2X | AC2Y

EXX | EXY

WBX | WBY

X-PIPE | Y-PIPE

*FIG. 1c*

SYSTEM CLOCK

INTERNAL CLOCK

X PIPE

| $ID1_{X0}$ | $ID1_{X1}$ | $ID1_{X2}$ | $ID1_{X3}$ | | | | |
| $ID2_{X0}$ | $ID2_{X1}$ | $ID2_{X2}$ | $ID2_{X3}$ | | | |
| $AC1_{X0}$ | $AC1_{X1}$ | $AC1_{X2}$ | $AC1_{X3}$ | | |
| $AC2_{X0}$ | $AC2_{X1}$ | $AC2_{X2}$ | $AC2_{X3}$ | |
| $EX_{X0}$ | $EX_{X1}$ | $EX_{X2}$ | $EX_{X3}$ |
| $WB_{X0}$ | $WB_{X1}$ | $WB_{X2}$ | $WB_{X3}$ |

Y PIPE

| $ID1_{Y0}$ | $ID1_{Y1}$ | $ID1_{Y2}$ | $ID1_{Y3}$ | | | | |
| $ID2_{Y0}$ | $ID2_{Y1}$ | $ID2_{Y2}$ | $ID2_{Y3}$ | | | |
| $AC1_{Y0}$ | $AC1_{Y1}$ | $AC1_{Y2}$ | $AC1_{Y3}$ | | |
| $AC2_{Y0}$ | $AC2_{Y1}$ | $AC2_{Y2}$ | $AC2_{Y3}$ | |
| $EX_{Y0}$ | $EX_{Y1}$ | $EX_{Y2}$ | $EX_{Y3}$ |
| $WB_{Y0}$ | $WB_{Y1}$ | $WB_{Y2}$ | $WB_{Y3}$ |

EP 0 649 084 A1

FIG. 2

34

FIG. 3

FIG. 4a

FIG. 4b

FIG. 4c

PREFETCH
ADDRESS

ACXT

170

40

110

RA

BNK 0

SET 0 | SET 1 | SET 2 | SET 3

BNK 1

SET 0 | SET 1 | SET 2 | SET 3

112

112

114

114

TA

FL/M

COFID

BHC

120

RHIST

THIST

RHIST

THIST

COFID

TA  RA

RESOLUTION
BUFFERS
152

ACXT

TACY

TACX

TACY

STACK
CONTROL

RAS

134  130  132

RESOLUTION
CONTROL
154

TDIR

TDIR
FL/M

FTC

140

150

CHECKPOINT | REPAIR | RESOLVE | TARG MISMATCH

190

SL
156

*FIG. 5a*

| 31 | | 9 | | 4 | 3 | | 1 | 0 |
|---|---|---|---|---|---|---|---|---|
| | TAG | | INDEX | | | TAG | | |

*FIG. 5b*

| 200 | Physical Register 0 | Physical Register 1 | Physical Register 2 | | | | Physical Register 31 | |
|---|---|---|---|---|---|---|---|---|
| Logical ID Reg | LogID[2:0] | LogID[5:3] | LogID[8:6] | • | • | • | LogID[98:96] | 210 |
| Size Reg | Size[1:0] | Size[3:2] | Size[5:4] | • | • | • | Size[65:64] | 212 |
| Current Reg | Current[0] | Current[1] | Current[2] | • | • | • | Current[31] | 214 |
| Pending Reg | Pending[0] | Pending[1] | Pending[2] | • | • | • | Pending[31] | 216 |
| Chkpnt 0 Reg | Chkpnt0[0] | Chkpnt0[1] | Chkpnt0[2] | • | • | • | Chkpnt0[31] | |
| Chkpnt 1 Reg | Chkpnt1[0] | Chkpnt1[1] | Chkpnt1[2] | • | • | • | Chkpnt1[31] | |
| Chkpnt 2 Reg | Chkpnt2[0] | Chkpnt2[1] | Chkpnt2[2] | • | • | • | Chkpnt2[31] | 218 |
| Chkpnt 3 Reg | Chkpnt3[0] | Chkpnt3[1] | Chkpnt3[2] | • | • | • | Chkpnt3[31] | |
| AC1x Reg | AC1x[0] | AC1x[1] | AC1x[2] | • | • | • | AC1x[31] | |
| AC1y Reg | AC1y[0] | AC1y[1] | AC1y[2] | • | • | • | AC1y[31] | |
| AC2x Reg | AC2x[0] | AC2x[1] | AC2x[2] | • | • | • | AC2x[31] | |
| AC2y Reg | AC2y[0] | AC2y[1] | AC2y[2] | • | • | • | AC2y[31] | 220 |
| EXx Reg | EXx[0] | EXx[1] | EXx[2] | • | • | • | EXx[31] | |
| EXy Reg | EXy[0] | EXy[1] | EXy[2] | • | • | • | EXy[31] | |
| Reg Busy Reg | RegBusy[0] | RegBusy[1] | RegBusy[2] | • | • | • | RegBusy[31] | 222 |

*FIG. 9*

PH1    PH2

RESOLVED ADDRESS

HISTORY

WRITE TARGET

WRITE

TARGET CACHE →
WRITE PH2

*FIG. 6a*
TARGET CACHE WRITE PH2

PH1    PH2

LOW BANK ADDRESS

HIGH BANK ADDRESS

HIT

TARGET

HISTORY

*FIG. 6b*
TARGET CACHE READ PH1

PH1    PH2

WRITE ADDRESS

HISTORY

WRITE HISTORY

WRITE

HISTORY CACHE →
WRITE PH2

*FIG. 6c*
HISTORY CACHE WRITE PH2

PH1    PH2

COFID

HIT

NT HISTORY

*FIG. 6d*
HISTORY CACHE READ PH1

39

FIG. 8

0,1 = PREDICTED NOT TAKEN
2,3 = PREDICTED TAKEN
T = ACTUAL TAKEN
NT = ACTUAL NOT TAKEN

FIG. 7

*FIG. 10a*

BRANCH RESOLVED
PREDICTION CORRECT ⟵340

CLEAR BIT j FOR
WB1, WB2, WB3, WB4
AND RETIRE WB1, WB2 ⟵342

BRANCH RESOLVED
MISPREDICTED ⟵350

IDENTIFY EACH WB
WITH k SPEC BIT SET ⟵352

CLEAR VALID BITS FOR WB
THAT WON'T RETIRE (WB3, WB4) ⟵354

CONTINUE

| | j | k | l | m | |
|---|---|---|---|---|---|
| WB1 | 0 | 0 | 0 | 0 | |
| WB2 | 0 | 0 | 0 | 0 | |
| WB3 | 0 | 1 | 0 | 0 | |
| WB4 | 0 | 1 | 1 | 0 | |

*FIG. 10b*

EP 0 649 084 A1

**European Patent Office**

**EUROPEAN SEARCH REPORT**

Application Number

EP 94 30 7582

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.6) |
| X | EP-A-0 401 922 (ADVANCED MICRO DEVICES) | 1,3,7,8, 11,13, 15,16 | G06F9/38 |
| Y | * the whole document * | 2,4,9, 10,12, 14,17,18 | |
| A | | 6,19 | |
| | --- | | |
| Y | IBM TECHNICAL DISCLOSURE BULLETIN. vol. 31, no. 9 , February 1989 , NEW YORK US pages 262 - 264 'Inexpensive history table for instruction prefetch' | 2,12 | |
| | --- | | |
| Y | MICROPROCESSING AND MICROPROGRAMMING. vol. 36, no. 5 , October 1993 , AMSTERDAM NL pages 243 - 257 GONZALEZ 'A survey of branch techniques in pipelined processors' * page 252, right column, lines 10-30 ; page 253, right column, lines 23-43 * | 9,17 | |
| | --- | | TECHNICAL FIELDS SEARCHED (Int.Cl.6) |
| Y | EP-A-0 301 220 (INTERNATIONAL BUSINESS MACHINES CORP.) * column 4, line 46 - column 5, line 6 ; column 9, lines 40-57 * | 10,18 | G06F |
| | --- | | |
| Y | WO-A-91 13406 (NEXGEN MICROSYSTEMS) * abstract, claims * | 4,14 | |
| | --- | | |
| X | EP-A-0 372 865 (MATSUSHITA ELECTRIC INDUSTRIAL CO., LTD.) | 1,5,6,11 | |
| A | * the whole document * | 19 | |
| | --- | | |
| | -/-- | | |

The present search report has been drawn up for all claims

| Place of search | Date of completion of the search | Examiner |
|---|---|---|
| THE HAGUE | 9 January 1995 | Klocke, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

43

European Patent Office

**EUROPEAN SEARCH REPORT**

Application Number

EP 94 30 7582

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 199 947 (INTERNATIONAL BUSINESS MACHINES CORP.) * the whole document * | 19 | |
| A | IBM TECHNICAL DISCLOSURE BULLETIN. vol. 34, no. 11 , April 1992 , NEW YORK US pages 269 - 271 'Return address stack cache' * the whole document * | 19 | |
| A | WO-A-87 05417 (NEC CORP.) * the whole document * | 19 | |

TECHNICAL FIELDS SEARCHED (Int.Cl.6)

The present search report has been drawn up for all claims

| Place of search | Date of completion of the search | Examiner |
|---|---|---|
| THE HAGUE | 9 January 1995 | Klocke, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)